# EUROPEAN PATENT APPLICATION

(11) **EP 1 777 281 A2**
(43) Date of publication of application: **25.04.2007**
(21) Application number: 06022146.2
(22) Date of filing: 23.10.2006
(51) Int. Cl.: C09K 11/80, H05B 33/14, C01F 17/00, C04B 35/44, H01J 1/62, H01S 3/00

(54) **Inorganic compound, composition and molded body containing the same, light emitting device, and solid laser device**

(30) Priority: 24.10.2005 JP 2005308001
(71) Applicant: Fujifilm Corporation, Minato-ku Tokyo (JP)
(72) Inventor: Takata, Masahiro, Ashigarakami-gun Kanagawa-ken (JP); Suzuki, Masayuki, Ashigarakami-gun Kanagawa-ken (JP)
(74) Representative: Klunker, Hans-Friedrich

(57) **Abstract**

Agarnet type compoundhas a composition, whichmaybe represented by the general formula:

Al(III)₃₋₂ₓA2(II)ₓA3(III)ₓB(III)₂C1(III)₃₋ₓC2(IV)ₓO₁₂

wherein each of the Roman numerals in the parentheses represents the valence number of ion; each of A1, A2, and A3 represents the element at the A site; B represents the element at the B site; each of C1 and C2 represents the element at the C site; each of A1, A2, B, C1, and C2 represents at least one kind of element exhibiting the corresponding valence number of ion defined above; A3 represents at least one kind of element selected from the group consisting of trivalent rare earth elements of La, Ce, Pr, Nd, Sm, Eu, Gd, Tb, Dy, Ho, Er, Tm, Yb, and Lu; A1 and A3 represent different elements; x represents a number satisfying a condition 0<x<1.5, provided that cases where x=1.0 are excluded; and O represents the oxygen atom.

## Description

### BACKGROUND OF THE INVENTION

### Field of the Invention

This invention relates to an inorganic compound, such as a garnet type compound. This invention also relates to a composition and a molded body containing the inorganic compound. This invention further relates to a light emitting device and a solid laser device.

### Description of the Related Art

As inorganic compounds, which are capable of being exited by irradiation of exciting light and are thereby capable of producing luminescence, there have heretofore been known the inorganic compounds containing rare earth element ions as luminescence center ions. As for Pr, which is one of the rare earth elements, it has been known that Pr exhibits a plurality of luminescence peaks in a visible light region and is capable of producing the luminescence of blue, green, yellow, and red colors. It is expected that, in cases where a Pr doping concentration in the inorganic compound is set at various different values, the luminescent materials capable of producing the luminescence of various colors will be capable of being obtained.

As one of candidate materials for matrix compounds to be doped with Pr, there may be mentioned Y₃Al₅O₁₂ (YAG), which is known as a laser substance and is advantageous for its good thermal stability, and the like. However, as will be described below in detail, it is not always possible to form a solid solution of Pr in YAG, and little research has heretofore been conducted with regard to the formation of the solid solution of Pr in YAG. The compound, in which Pr has been doped in YAG, will hereinbelow be referred to as Pr-YAG.

In cases where Pr is to be doped in YAG, a part of Y³⁺ ions at an A site are substituted by Pr³⁺ ions through the formation of the solid solution. However, an ionic radius r2 (=0.1126nm) of the Pr³⁺ ions (at the A site) is larger than the ionic radius r1 (=0.1019nm) of the Y³⁺ ions (at the A site) (i.e., r2>r1). Therefore, a coefficient of segregation at the time of the doping of Pr in YAG is approximately equal to zero (as described in, for example, R. R. Monchamp, "The Distribution Coefficient of Neodymium and Lutetium in Czochralski Grown Y3Al5O12", J. Cryst. Growth, Vol. 11, Issue 3, pp. 310-312, 1971, A. Ikesue and Y. Sato, "Synthesis of Pr Heavily-Doped, Transparent YAG Ceramics", J. Ceram. Soc. J., Vol. 109, Issue 7, pp. 640-642, 2001, A. Ikesue et al., "Development and Prospect of Ceramic Laser Elements", Laser Review, Vol. 27, No. 9, pp. 593-598, 1999, andA. Ikesue, Materials for Fourth Optical Material Applied Technology Research Meeting (2005)). The foregoing indicates that it is not always possible to form the solid solution of Pr in YAG.

The term "ionic radius" as used herein means the so-called "Shannon's ionic radius." (Reference may be made to, for example, R. D. Shannon, "Revised Effective Ionic Radii and Syntematic Studies of Interatomic Distances in Halides and Chalcogenides", Acta Cryst., Vol. A32, pp. 751-767, 1976.)

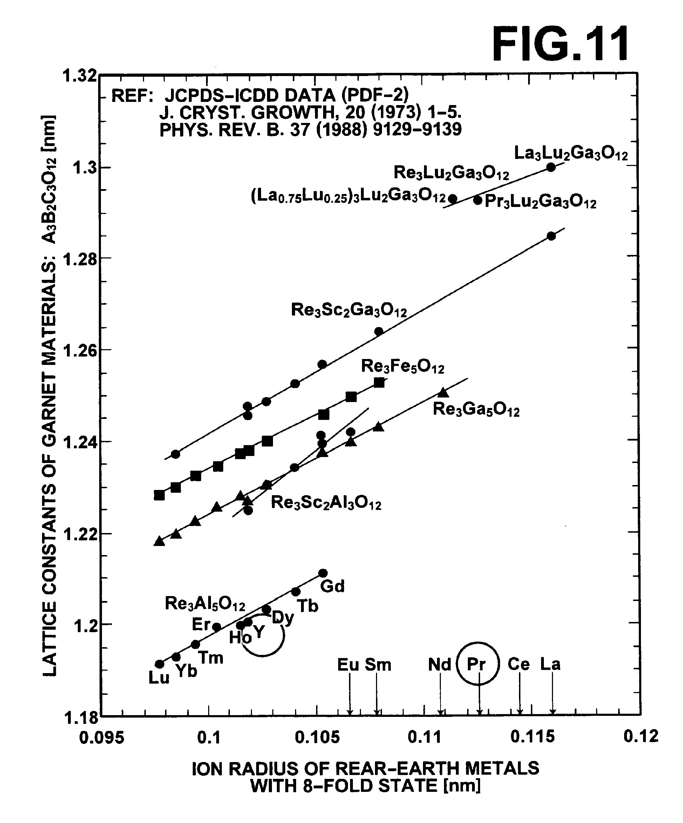

Y₃Al₅O₁₂ is a garnet type compound. Figure 11 is a graph showing relationships between ionic radiuses of rare earth elements, which are contained in garnet type compounds, and lattice constants of the garnet type compounds. Figure 11 shows the results of adjustments made by the inventors principally in accordance with open data of U.S. International Centre for Diffraction Data (ICDD) and data described in C. D. Brandle and R. L. Barns, "Crystal Stoichiometry and Growth of Rare-Earth Garnets Containing Scandium", J. Cryst. Growth, Vo1.20, Issue 1, pp. 1-5, 1973.

As for rare earth aluminum garnet type compounds (RE₃Al₅O₁₂), Figure 11 indicates that only the compounds containing the rare earth elements having an ionic radius of at most 0.106 nm are present, and that nothing has been reported with regard to the compounds containing Eu, Sm, Nd, Pr, Ce, and La, which have an ionic radius larger than 0.106 nm. It is indicated also from Figure 11 that it is not always possible to form the solid solution of Pr, which has a large ionic radius, in YAG.

Actually, reports on a Pr doping concentration higher than 2 mol% in YAG have heretofore been made only in, for example, five literatures, i.e., A. IkesueandY. Sato, "SynthesisofPrHeavily-Doped, Transparent YAG Ceramics", J. Ceram. Soc. J., Vol. 109, Issue 7, pp. 640-642, 2001; E. Y. Wong et al., "Absorption and Fluorescence Spectra of Several Praseodymium-Doped Crystals and the Change of Covalence in the Chemical Bonds of the Praseodymium Ion", J. Chem. Phys., Vol. 39, No. 3, pp. 786-793, 1963, F. N. Hooge, "Spectra of Praseodymium in Yttrium Gallium Garnet and in Yttrium Aluminum Garnet", J. Chem. Phys., Vol. 45, No. 12, pp. 4504-4509, 1966, J. P. van der Ziel et al., "Optical Detection of Site Selectivity for Rare-Earth Ions in Flux-Grown Yttrium Aluminum Garnet", Phys. Rev. Lett., Vol. 27, No. 8, pp. 508-511, 1971, and X. Wu et al., "Temperature Dependence of Cross-Relaxation Processes in Pr3+-Doped YttriumAluminum Garnet", Phys. Rev. B, Vol. 50, No. 10, pp. 6589-6595, 1994. Also, nothing is described with respect to an analysis of the Pr doping concentration in E. Y. Wong et al., "Absorption and Fluorescence Spectra of Several Praseodymium-Doped Crystals and the Change of Covalence in the Chemical Bonds of the Praseodymium Ion", J. Chem. Phys., Vol. 39, No. 3, pp. 786-793, 1963, F. N. Hooge, "Spectra of Praseodymium in Yttrium Gallium Garnet and in Yttrium Aluminum Garnet", J. Chem. Phys., Vol. 45, No. 12, pp. 4504-4509, 1966, J. P. van der Ziel et al., "Optical Detection of Site Selectivity for Rare-Earth Ions in Flux-Grown YttriumAluminum Garnet", Phys. Rev. Lett., Vol. 27, No. 8, pp. 508-511, 1971, and X. Wu et al., "Temperature Dependence of Cross-Relaxation Processes in Pr3+-Doped Yttrium Aluminum Garnet", Phys. Rev. B, Vol. 50, No. 10, pp. 6589-6595, 1994. Ordinarily, the doping concentration in a crystal is illustrated in terms of the loading composition at the time of growth. In such cases, the true doping concentration in the crystal after being grown will often vary markedly from the loading composition at the time of growth.

In, for example, A. Ikesue and Y. Sato, "Synthesis of Pr Heavily-Doped, Transparent YAG Ceramics", J. Ceram. Soc. J., Vol. 109, Issue 7, pp. 640-642, 2001, in which the analysis of the Pr doping concentration is described, a report is made on Pr-YAG (4.3% Pr-YAG) constituted of a polycrystal sintered body, in which Pr is doped at a concentration of 4.3 mol% in YAG. In the aforesaid literature, it is described that powder X-ray diffraction measurements revealed the acquisition of a single phase garnet type crystal. Also, in the aforesaid literature, it is described that ethyl silicate was mixed in raw material powder during the preparation of 4.3% Pr-YAG. Specifically, in the experiments described in the aforesaid literature, Si was added. However, it is not clear how Si is present in the crystal, and it is not clear whether Si is mixed in a mere additive form or whether Si forms a solid solution by substitution of a part of lattice sites. In cases where reference is made to A. Ikesue and Y. Sato, "Synthesis of Pr Heavily-Doped, Transparent YAG Ceramics", J. Ceram. Soc. J., Vol. 109, Issue 7, pp. 640-642, 2001, A. Ikesue et al., "Development and Prospect of Ceramic Laser Elements", Laser Review, Vol. 27, No. 9, pp. 593-598, 1999, and A. Ikesue, Materials for Fourth Optical Material Applied Technology Research Meeting (2005), which are the reports made by the identical research worker, though the formation of the solid solution of Pr in YAG is stated to be difficult, nothing is manifested with regard to reasons for the achievement of the Pr doping at the doping concentration of as high as 4.3mol%. Further, it is not clear whether the addition of Si has or has not a relationship with the achievement of the Pr doping at the doping concentration of as high as 4.3 mol%.

Ordinarily, it may be considered that the phenomena will occur in which, in cases where quadrivalent Si is mixed and enters into lattice interstices, the system will become in excess of oxygen, and in which, in cases where a part of the lattice sites are substituted by Si, the other elements will be reduced. However, with respect to material designing, in which the aforesaidphenomena are taken into consideration, nothing is mentioned in A. Ikesue and Y. Sato, "Synthesis of Pr Heavily-Doped, Transparent YAG Ceramics", J. Ceram. Soc. J., Vol. 109, Issue 7, pp. 640-642, 2001. Also, with respect to effects of the Si addition upon luminescence characteristics, such as luminescence intensity, nothing is studied in A. Ikesue and Y. Sato, "Synthesis of Pr Heavily-Doped, Transparent YAG Ceramics", J. Ceram. Soc. J., Vol. 109, Issue 7, pp. 640-642, 2001.

A system, in which Mg is subjected to the formation of the solid solution together with Pr, is described in, for example, T. Suemoto et al., "Defect-Induced Persistent Hole Burning in MgO-Doped Pr3+: YAG Systems", Opt. Commun. Vol. 145, p. 113, 1998, in which an analysis of the Pr doping concentration is manifested. In the literature of T. Suemoto et al., Opt. Commun. Vol. 145, pp. 113-118, 1998, the Pr doping concentrations, expressed in terms of Mg/Pr (mol%/mol%), of 0/0.89, 0.05/0.69, 0.13/0.63, 0.55/1.2, and 2.47/0.96 are reported. In T. Suemoto et al., "Defect-Induced Persistent Hole Burning in MgO-Doped Pr3+:YAG Systems", Opt. Commun. Vol. 145, p. 113, 1998, in which an analysis of the Pr doping concentration is manifested. In the literature of T. Suemoto et al., Opt. Commun. Vol. 145, pp. 113-118, 1998, the Pr doping concentration higher than 1.2 mol% is not reported. Also, in T. Suemoto et al., "Defect-Induced Persistent Hole Burning in MgO-Doped Pr3+:YAG Systems", Opt. Commun. Vol. 145, p. 113, 1998, in which an analysis of the Pr doping concentration is manifested. In the literature of T. Suemoto et al., Opt. Commun. Vol. 145, pp. 113-118, 1998, Mg²⁺ having a small ionic radius (0.089nm) is simultaneously subjected to the formation of the solid solution, and Mg and Pr are not in equimolar quantities. Therefore, in cases where consideration is made in accordance with the theory of electric charge neutrality, there is possibility that the valence number of ion of Pr will alter from 3 to 4 in the presence of Mg. However, with respect to material designing, in which the aforesaid possibility is taken into consideration, nothing is mentioned in T. Suemoto et al., "Defect-Induced Persistent Hole Burning inMgO-Doped Pr3+: YAG Systems", Opt. Commun. Vol. 145, p. 113, 1998, in which an analysis of the Pr doping concentration is manifested. In the literature of T. Suemoto et al., Opt. Commun. Vol. 145, pp. 113-118, 1998.

As for compounds other than Pr-YAG, techniques for preparing a YAG polycrystal sintered body are disclosed in, for example, Japanese Unexamined Patent PublicationNos. 5 (1993) -286761 and 5 (1993) -294723. With the disclosed techniques for preparing a YAG polycrystal sintered body, an appropriate quantity of at least one kind of oxide selected from Li₂O, Na₂O₃, MgO, CaO, and SiO₂ is added as a sintering auxiliary at the time of the preparation of the YAG polycrystal sintered body, and a transmittance equivalent to the transmittance of a YAG single crystal is thereby obtained. However, with respect to in what form the additive is present in the crystal and what effects the additive has upon the luminescence characteristics, such as the luminescence intensity, nothing is studied in Japanese Unexamined Patent Publication Nos. 5(1993)-286761 and 5(1993)-294723.

Also, as for compounds other than Pr-YAG, a system of the solid solution of Ca or Mg in YAG is reported in, for example, L. Schuh et al., "Electrical Transport and Defect Properties of Ca- and Mg-Doped Yttrium Aluminum Garnet Ceramics", J. Appl. Phys., Vol.66, Issue 6, pp. 2627-2632, 1989. However, inL. Schuhetal., "Electrical Transport and Defect Properties of Ca- and Mg-Doped Yttrium Aluminum Garnet Ceramics", J. Appl. Phys., Vol.66, Issue 6, pp. 2627-2632, 1989, evaluation of electric conductivity is merely described, and nothing is studied with respect to the effects of the additive upon the luminescence characteristics, such as luminescence intensity.

Systems, in which Mg or Ca is subjected to the formation of the solid solution together with element ions, such as Pr ions, which acts are the luminescence center, are reported in, for example, A. Sugimoto et al., "Crystal Growth and Optical Characterization of Cr, Ca: Y3Al5O12", J. Cryst. Growth, Vol. 140, Issues 3-4, pp. 349-354, 1994, S. Ishibashi et al., "Cr, Ca: Y3Al5O12 Laser Crystal Grown by the Laser-Heated Pedestal Growth Method", J. Cryst. Growth, Vol. 183, Issue 4, pp. 614-621, 1998, R. Haibo et al., "The Growth and Absorption Characterization of Cr, Ca:YAG by Liquid-Phase Epitaxy", J. Cryst. Growth, Vol. 236, Issues 1-3, pp. 191-196, 2002, R. Feldman et al., "Dynamics of Chromium Ion Valance Transformations in Cr, Ca: YAG Crystals Used as Laser Gain and Passive Q-Switching Media", Optical Materials, Vol. 24, pp. 333-344, 2003, Ya. M. Zakharko et al., "Transformation of Valance states and Luminescence of Chromium Ions in the YAF:Cr, Mg and GGG:Cr, Mg Single Crystalline Films", Phys. Stat. Sol. (c), pp. 551-554, 2005, and L. D. Merkle et al., "Spectroscopy and Laser Operation of Pr, Mg: SrAl12O19", J. Appl. Phys., Vol. 79, Issue 4, pp. 1849-1856, 1996 The reports made in the literatures described above concern research aiming at shifting of electric charges of the element ions acting as the luminescence center (Cr³⁺→Cr⁴⁺, Pr³⁺→Pr⁴⁺) and are silent on studies with respect to the luminescence intensity, and the like.

A matrix compound, which may be represented by Formula (I) shown below, and an inorganic compound constituted of a solid solution of an inorganic oxide, which may be represented by Formula (II) shown below, in the matrix compound, the inorganic compound being represented by Formula (III) shown below, are disclosed in, for example, U.S. Patent No. 7, 029, 602. (Reference may be made to Claims 1, 2, and 3 thereof.)

MLn₂QR₄O₁₂ (I)

Ln₃R₅O₁₂ (II)

(1-x) MLn₂QR₄O₁₂·xLn₃R₅O₁₂ (III)

wherein M represents at least one kind of element selected from the group consisting of Mg, Ca, Sr, and Ba,
Ln represents at least one kind of rare earth element selected from the group consisting of Sc, Y, La, Ce, Pr, Nd, Sm, Eu, Gd, Tb, Dy, Ho, Er, Tm, Yb, and Lu,
Q represents at least one kind of element selected from the group consisting of Si, Ge, Sn, and Pb,
R represents at least one kind of element selected from the group consisting of B, Al, Ga, In, and Tl, and
x represents a number satisfying the condition 0<x≤0.98.

In U.S. Patent No. 7,029,602, it is described that the matrix compound, which may be represented by Formula (I) shown above, is a novel compound. The inorganic compound, which may be represented by Formula (III) shown above, results from the processing, wherein the element Ln and the element R, which are of the same kinds as those contained in the matrix compound, are doped into the matrix compound, and wherein x mol of the element M contained in the matrix compound is substituted by Ln. The matrix compound, which may be represented by Formula (I) shown above, contains the inorganic compound, in which the element ions Ln, such as Pr, the element ions M, such as Mg, and the element ions Q, such as Si, have been doped in YAG.

In U.S. Patent No. 7,029,602, a luminescence spectrum (a fluorescence spectrum) of a compound having been prepared in an Example is described, and it is described that the compound having been prepared in the Example is capable of being utilized as a luminescent body. However, U.S. Patent No. 7,029,602 is silent with respect to an idea of material designing, which led to the finding out of the matrix compound represented by Formula (I) shown above, what composition is thought to be appropriate from the view point of the luminescence intensity, and the like.

As described above, it is not always possible to form the solid solution of Pr in YAG. Therefore, little basic research has heretofore been conducted with regard to Pr-YAG, and research on material designing for facilitating the formation of the solid solution of Pr in YAG has not heretofore been conducted. Also, though the doping of metal ions in Pr-YAG or YAG has been reported, research on the doping of metal ions appropriate from the view point of the luminescence intensity has not heretofore been conducted. Besides the cases of Pr-YAG, the above circumstances occur with the overall systems, in which a part of substitutable ions of the garnet type compound acting as the matrix compound are to be substituted by luminescent element ions, such as the Pr ions.

### SUMMARY OF THE INVENTION

The primary object of the present invention is to provide a novel idea of material designing for facilitating formation of a solid solution of substituent ions in a garnet type compound acting as a matrix compound in a system, in which a part of substitutable ions of the garnet type compound acting as the matrix compound are to be substituted by the substituent ions having an ionic radius larger than the ionic radius of the substitutable ions.

Another object of the present invention is to provide a garnet type compound having a novel composition having been designed in accordance with the novel idea of material designing.

The specific object of the present invention is to enhance a luminescence intensity of a garnet type compound through optimization of element ions to be doped in the garnet type compound.

As described above, the present invention relates particularly to the garnet type compound. The present invention is also applicable to an inorganic compound other than the garnet type compound.

Specifically, a further object of the present invention is to provide a novel idea of material designing for facilitating formation of a solid solution of substituent ions in a matrix compound in a system, in which a part of substitutable ions of the matrix compound are to be substituted by the substituent ions having an ionic radius larger than the ionic radius of the substitutable ions.

A still further object of the present invention is to provide an inorganic compound having a novel composition having been designed in accordance with the novel idea of material designing.

The inventors conducted extensive studies in order to solve the problems described above and made the material designing of Pr-YAG as described below by paying attention to balance of the ionic radius and the valence number of ion.

The inventors firstly considered that, in order for a solid solution to be formed appropriately by substitution of a part of the Y³⁺ ions (ionic radius r1 (A site) = 0.1019nm) of YAG by the Pr³⁺ ions (ionic radius r2 (A site) = 0.1126nm) having an ionic radius larger than the ionic radius of the Y³⁺ ions, Mg²⁺ ions (ionic radius r3 (A site) = 0.089nm) having an ionic radius smaller than the ionic radius of the Y³⁺ ions might be subjected to the formation of the solid solution simultaneously with the Pr³⁺ ions. The inventors considered that, in such cases, a spatial margin would arise at the A site for receiving the Pr³⁺ ions, and Pr wouldbe capable of easily forming the solid solution in YAG. It is considered that, since the Mg²⁺ ions are non-luminescent element ions, the simultaneous doping of the Mg²⁺ ions will not affect the luminescence characteristics.

However, in cases where the bivalent Mg is subjected to the formation of the solid solution at the A site, which is originally the site exhibiting the valence number of 3, there is the possibility that the valence number of Pr having been doped will alter to 4 due to the valence number balance of electric charges. If the valence number of Pr alters to 4, the problems will occur in that the luminescence characteristics, such as the luminescence spectrum, vary from the desired characteristics.

The inventors considered that, in cases where quadrivalent Si is simultaneously subjected to the formation of the solid solution at the time of the formation of the solid solution of Pr and Mg, electric charge compensation will be made between the Mg²⁺ ions and the Si⁴⁺ ions, and the valence number of Pr will be capable of being kept at 3. It is considered that, since the Si⁴⁺ ions are the non-luminescent element ions, the simultaneous doping of the Si⁴⁺ ions will not affect the luminescence characteristics. It is presumed that, since the Si⁴⁺ ions (ionic radius (C site) = 0.026nm) have an ionic radius smaller than the ionic radius of the A1³⁺ ions (ionic radius (C site) = 0. 039nm) , a part of Al constituting the C site of YAG is substituted by Si.

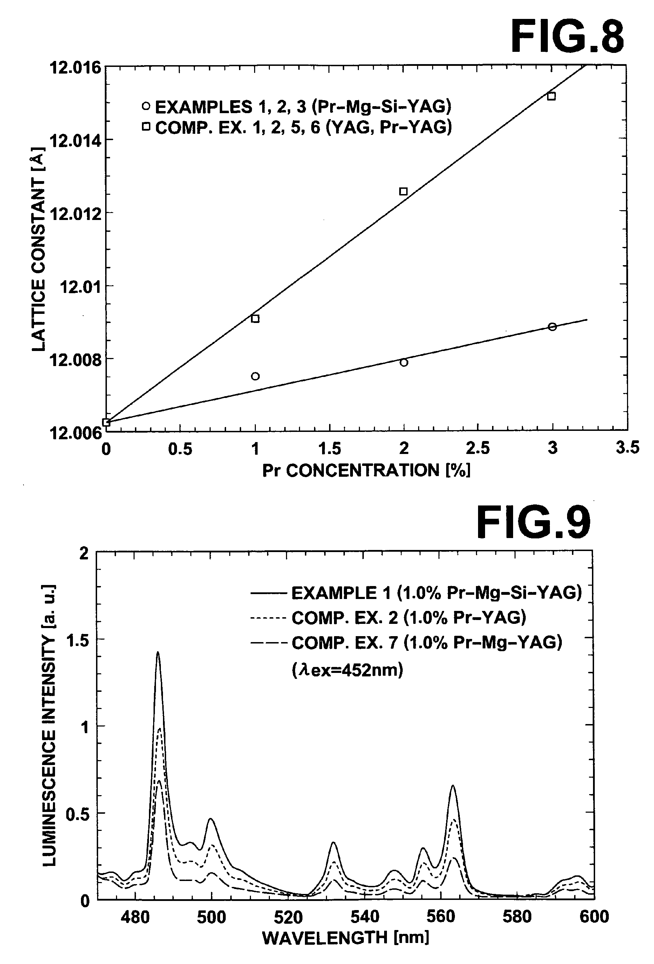

In accordance with the designing idea described above, the inventors have found that, in cases where Pr, Mg, and Si are simultaneously subjected to the formation of the solid solution in YAG, it becomes easy for Pr to form the solid solution in YAG. The inventors have also found that, when a comparison is made, on the basis of an identical Pr doping concentration, between the aforesaid cases, wherein Pr, Mg, and Si are simultaneously subjected to the formation of the solid solution in YAG, and the cases wherein Mg and Si are not simultaneously subjected to the formation of the solid solution in YAG, the lattice constant becomes markedly smaller in the aforesaid cases, wherein Pr, Mg, and Si are simultaneously subjected to the formation of the solid solution in YAG, than in the cases wherein Mg and Si are not simultaneously subjected to the formation of the solid solution in YAG (as will be described later with reference to Figure 8). It has thus been found that the effect of suppressing the lattice expansion is capable of being obtained in the aforesaid cases, wherein Pr, Mg, and Si are simultaneously subjected to the formation of the solid solution in YAG.

Also, the inventors have found that, when a comparison is made on the basis of an identical Pr doping concentration, a Pr-Mg-Si-YAG compound, which is obtained from the processing for subjecting Pr, Mg, and Si simultaneously to the formation of the solid solution in YAG, exhibits a luminescence intensity (a fluorescence intensity) higher than the luminescence intensity obtainable with the Pr-YAG compound, in which Mg and Si are not subjected to the formation of the solid solution, and the luminescence intensity obtainable with a Pr-Mg-YAG compound, in which Mg is subjected to the formation of the solid solution and in which Si is not subjected to the formation of the solid solution (as will be described later with reference to Figure 9).

The afore said idea itself of the material designing in accordance with the present invention is the novel idea. Besides Pr-YAG, the idea in accordance with the present invention is also applicable to other garnet type compounds. The combination of the kind of the substitutable ions in the matrix compound, the kind of the substituent ions, by which the substitutable ions are to be substituted, and the two kinds of the non-luminescent element ions, which are to be simultaneously subjected to the formation of the solid solution, is not limited to the combination described above. The idea in accordance with the present invention is further applicable to garnet type compounds having no luminescence characteristics. Specifically, the garnet type compound having the composition described below is the novel compound.

Specifically, the present invention provides a garnet type compound, which may be represented by the general formula:

A1 (III)₃₋₂ₓA2 (II)ₓA3 (III)ₓB(III)₂C1 (III)₃₋ₓC2 (IV)ₓO₁₂

wherein each of the Roman numerals in the parentheses represents the valence number of ion,
each of A1, A2, and A3 represents the element at the A site,
B represents the element at the B site,
each of C1 and C2 represents the element at the C site,
each of A1, A2, B, C1, and C2 represents at least one kind of element exhibiting the corresponding valence number of ion defined above,
A3 represents at least one kind of element selected from the group consisting of trivalent rare earth elements of La, Ce, Pr, Nd, Sm, Eu, Gd, Tb, Dy, Ho, Er, Tm, Yb, and Lu,
A1 and A3 represent different elements,
x represents a number satisfying a condition 0<x<1.5, provided that cases where x=1.0 are excluded, and
O represents the oxygen atom.

The aforesaid garnet type compound in accordance with the present invention is of the system, in which A1 (III) acts as the substitutable ions contained in the matrix compound, and in which a part of A1 (III) is substituted by A3(III). The aforesaid garnet type compound in accordance with the present invention is the compound obtained from the processing, in which A2 (II) and C2 (IV) are simultaneously subjected to the formation of the solid solution at the time of the formation of the solid solution of A3(III).

In the aforesaid garnet type compound in accordance with the present invention, A2(II), A3 (III), and C2(IV) are contained in equimolar quantities. In cases where the constitution described above is employed, good relationship between the ionic radius and the valence number of ion is capable of being obtained. As described above, the blending of raw materials is performed such that the number of mols of A2(II), the number of mols of A3(III), and the number of mols of C2 (IV) may become equimolar with one another. However, there is the possibility that the number of mols of A2 (II) , the number of mols of A3(III), and the number of mols of C2 (IV) in the ultimately prepared compound will slightly deviate from 1:1:1. Therefore, it is herein regarded that, in cases where the number of mols of A2 (II) or the number of mols of C2 (IV) falls within the range of 0.9 to 1.1 times as large as the number of mols x of A3 (III), A2 (II) or C2 (IV) is contained in the quantity equimolar with A3(III).

As described above with reference to the related art, a matrix compound, which may be represented by Formula (I) shown below, and an inorganic compound constituted of a solid solution of an inorganic oxide, which may be represented by Formula (II) shown below, in the matrix compound, the inorganic compound being represented by Formula (III) shown below, are disclosed in, for example, U.S. Patent No. 7,029,602.

MLn₂QR₄O₁₂ (I)

Ln₃R₅O₁₂ (II)

(1-x) MLn₂QR₄O₁₂·xLn₃R₅O₁₂ (III)

wherein M represents at least one kind of element selected from the group consisting of Mg, Ca, Sr, and Ba,
Ln represents at least one kind of rare earth element selected from the group consisting of Sc, Y, La, Ce, Pr, Nd, Sm, Eu, Gd, Tb, Dy, Ho, Er, Tm, Yb, and Lu,
Q represents at least one kind of element selected from the group consisting of Si, Ge, Sn, and Pb,
R represents at least one kind of element selected from the group consisting of B, Al, Ga, In, and Tl, and
x represents a number satisfying the condition 0<x≤0.98.

In U.S. Patent No. 7, 029, 602, it is described that the matrix compound, which may be represented by Formula (I) shown above, is a novel compound. The invention of U.S. Patent No. 7, 029, 602 is based upon the idea, wherein the element Ln and the element R, which are of the same kinds as those contained in the matrix compound, are doped into the matrix compound, wherein x mol of the element M contained in the matrix compound is substituted by Ln, and wherein the inorganic compound, which may be represented by Formula (III) shown above, is thereby designed. The idea of the inventionofU.S. PatentNo. 7, 029, 602 is quite different from the designing idea of the present invention. Also, basically, the composition in the invention of U.S. Patent No. 7,029,602 is different from the composition employed in the present invention.

However, of the matrix compound described in U.S. Patent No. 7,029,602, which matrix compound may be represented by Formula (I) shown above, for example, the compound, which may be represented by Formula (I), wherein M represents Mg, Ln represents Y_{0.5}Pr_{0.5}, Q represents Si, and R represents Al, (i.e., the compound, which may be represented by the formula YMgPrAl₄SiO₁₂) happens to have the composition that coincides with the composition of the garnet type compound in accordance with the present invention, which garnet type compoundmaybe represented by the aforesaid general formula:

Al(III)₃₋₂ₓA2(II)ₓA3(III)ₓB(III)₂Cl(III)₃₋ₓC2(IV)ₓO₁₂.

The coincidence of the composition of the matrix compound described in U.S. Patent No. 7, 029, 602, which matrix compound may be represented by Formula (I) shown above, and the composition of the garnet type compound in accordance with the present invention, which garnet type compound may be represented by the aforesaid general formula:

A1(III)₃₋₂ₓA2(II)ₓA3(III)ₓB(III)₂C1(III)₃₋ₓC2(IV)ₓO₁₂,

with each other happens to occur only in cases where the compound is constituted of the combination of the specific elements as exemplified above, and at the same time x=1.0. Therefore, the cases where x=1.0 are excluded from the composition formula of the garnet type compound in accordance with the present invention.

Since the cases where x=1.0 are excluded from the composition formula of the garnet type compound in accordance with the present invention, even if it happens that the constituent elements of the matrix compound described in U.S. Patent No. 7, 029, 602, which matrix compound may be represented by Formula (I) shown above, are identical with the constituent elements of the garnet type compound in accordance with the present invention, it will not occur that the matrix compound described in U.S. Patent No. 7,029,602 satisfies the equimolar relationships among the number of mols of A2 (II), the number of mols of A3(III), and the number of mols of C2(IV).

As for the inorganic compound described in U.S. Patent No. 7, 029, 602, which inorganic compound may be represented by Formula (III) shown above, as described in the paragraph 0062, and the like, of U.S. Patent No. 7,029,602, Ln on the left-hand side of Formula (III) and Ln on the right-hand side of Formula (III) (i.e., Ln in the left-hand part (1-x)MLn₂QR₄O₁₂ and Ln in the right-hand part xLn₃R₅O₁₂) represent an identical element. Therefore, it does not occur that the compound, which is described in U.S. Patent No. 7, 029, 602, will constitute the garnet type compound in accordance with the present invention, which garnet type compound may be represented by the aforesaid general formula:

Al(III)₃₋₂ₓA2(II)ₓA3(III)ₓB(III)₂C1(III)₃₋ₓC2(IV)ₓO₁₂.

The idea itself of the material designing in accordance with the present invention is the novel idea. Besides the garnet type compound, the idea of the material designing in accordance with the present invention is also applicable to a system, in which a part of substitutable ions of the matrix compound are to be substituted by the substituent ions having an ionic radius larger than the ionic radius of the substitutable ions. The inorganic compound having been designed in accordance with the material designing in accordance with the present invention is a novel compound.

Specifically, the present invention also provides an inorganic compound, containing a solid solution having been formed by substitution of a part of substitutable ions (a) contained in a matrix compound, which substitutable ions (a) have an ionic radius r1, by luminescent element ions (b) exhibiting a valence number of ion of n, which luminescent element ions (b) have an ionic radius r2 larger than the ionic radius r1 of the substitutable ions (a), where r2>r1,
the formation of the solid solution of the luminescent element ions (b) being performed with processing, in which at least one kind of first non-luminescent element ions (c) and at least one kind of second non-luminescent element ions (d) are simultaneously subjected to the formation of the solid solution,
the at least one kind of the first non-luminescent element ions (c) exhibiting an ion valence number a, and having an ionic radius r3 smaller than the ionic radius r1 of the substitutable ions (a), where r3<r1,
the at least one kind of the second non-luminescent element ions (d) exhibiting a valence number of ion of b, where b satisfies a condition a+b=2n.

The term "ionic radius" as used herein means the so-called "Shannon" s ionic radius." (As for the Shannon' s ionic radius, reference may be made to, for example, R. D. Shannon, "Revised Effective Ionic Radii and Syntematic Studies of Interatomic Distances in Halides and Chalcogenides", Acta Cryst., Vol. A32, pp. 751-767, 1976.)

The inorganic compound in accordance with the present invention may be modified such that the matrix compound is a garnet type compound, which may be represented by the general formula:

A(III)₃B(III)₂C(III)₃O₁₂

wherein each of the Roman numerals in the parentheses represents the valence number of ion,
A represents the element at the A site and represents at least one kind of element selected from the group consisting of Y, Sc, In, and trivalent rare earth elements of La, Ce, Pr, Nd, Sm, Eu, Gd, Tb, Dy, Ho, Er, Tm, Yb, and Lu,
B represents the element at the B site and represents at least one kind of element selected from the group consisting of Al, Sc, Ga,
Cr, In, and trivalent rare earth elements of La, Ce, Pr, Nd, Sm, Eu, Gd, Tb, Dy, Ho, Er, Tm, Yb, and Lu,
C represents the element at the C site and represents at least one kind of element selected from the group consisting of Al and Ga, and
O represents the oxygen atom.

Also, the inorganic compound in accordance with the present invention may be modified such that the matrix compound is a C rare earth type compound, a perovskite type compound, a GdFeO₃ type compound, or the like.

Each of the aforesaid garnet type compound in accordance with the present invention and the inorganic compound in accordance with the present invention may have a single crystalline structure or a polycrystalline structure and may contain inevitable impurities. Also, each of the aforesaid garnet type compound in accordance with the present invention and the inorganic compound in accordance with the present invention should preferably be of a single phase as a whole. However, each of the aforesaid garnet type compound in accordance with the present invention and the inorganic compound in accordance with the present invention may contain a heterogeneous phase within a range such that the characteristics may not be affected.

As for Pr-doped inorganic compounds other than Pr-YAG, several reports have heretofore been made with respect to the relationship between the doping of metal ions and the luminescence intensity.

In, for example, a literature of W. Jia et al., Solid State Commun. Vol.126, pp. 153-157, 2003, it is reported that, with respect to a system of Pr-Sr₁₋ₓCaₓTiO₃, the luminescence intensity becomes high in accordance with an increase of the Ca quantity x at the A site. However, with the research reported in the aforesaid literature, a comparison is merely made between Pr-SrTiO₃ (x=0) and Pr-CaTiO₃ (x=1).

The systemof Pr-Sr₁₋ₓCaₓTiO₃ reported in the aforesaid literature is the system, in which the bivalent Sr is substituted by Ca having the identical valence number. Thus it is not intended to make the electric charge compensation for the formation of the solid solution of Ca. Also, since the Sr²⁺ ions (ionic radius (coordination number: 12) = 0.144nm) have the markedly large ionic radius, the effect of adjusting the ionic radius is not obtained from the formation of the solid solution of Ca.

In, for example, a literature of J. Li et al., Jpn. J. Appl. Phys., Vol. 44, p. L708, 2005, it is reported that the doping of Mg in Pr-BaTiO₃ leads to an increase in luminescence intensity. In the aforesaid literature, with respect to the mechanism of the enhancement of the luminescence intensity, the hypotheses described below are made. (Hypothesis 1) With the doping of Mg, Mg²⁺ ions will form the solid solution by substitution at the Ti⁴⁺ site and make the electric charge compensation for the Pr ions, which form the solid solution by substitution at the Ba²⁺ site. (Hypothesis 2) With the doping of Mg, the Pr solid solution site will transfer to the Ti site, the coordination number will become six, and the luminescence intensity will thereby increase.

However, with the study reported in the aforesaid literature, experiments are merely conducted, wherein the Mg doping concentration is set at various different values, while the concentration of the Pr ions acting as the luminescence center is being kept at a predetermined value. With the aforesaid experiments alone, it is not clear which site is intended to be subjected to the formation of the solid solution by substitution by Mg. Therefore, it will not be appropriate to explain the mechanism of the enhancement of the luminescence intensity only with the hypotheses described above. Even if the hypotheses described above are correct, the experiments described above will not concern the material designing, which is made from both the ionic radius and the electric charge compensation as in the idea in accordance with the present invention.

Specifically, the idea itself of the material designing in accordance with the present invention, which material designing is made from both the ionic radius and the electric charge compensation, is the novel idea.

The present invention further provides a composition,containing the garnet type compound in accordance with the present invention or the inorganic compound in accordance with the present invention.

The present invention still further provides a molded body, containing the garnet type compound in accordance with the present invention or the inorganic compound in accordance with the present invention.

The molded body in accordance with the present invention should preferably be modified such that the molded body is constituted of a polycrystal sintered body, which contains the garnet type compound or the inorganic compound, or a molded body having been obtained from processing, in which particles of the polycrystal sintered body having been obtained from grinding processing are bound together by a binder and are molded.

The present invention also provides a light emitting device, comprising:
i) a luminescent body constituted of a molded body containing a compound in accordance with the present invention, which compound is capable of producing the luminescence by being excited by exciting light, and
ii) an exciting light source for producing the exciting light to be irradiated to the luminescent body.

The present invention further provides a solid laser device, comprising:
i) a solid laser medium constituted of a molded body containing a compound in accordance with the present invention, which compound is capable of acting as a laser substance capable of producing a laser beam by being excited by exciting light, and
ii) an exciting light source for producing the exciting light to be irradiated to the solid laser medium.

The garnet type compound in accordance with the present invention may be represented by the general formula:

A1 (III) ₃₋₂ₓA2 (II)ₓA3 (III)ₓB(III) ₂C1 (III) ₃₋ₓC2 (IV)ₓO₁₂

wherein each of the Roman numerals in the parentheses represents the valence number of ion,
each of A1, A2, and A3 represents the element at the A site,
B represents the element at the B site,
each of C1 and C2 represents the element at the C site,
each of A1, A2, B, C1, and C2 represents at least one kind of element exhibiting the corresponding valence number of ion defined above,
A3 represents at least one kind of element selected from the group consisting of trivalent rare earth elements of La, Ce, Pr, Nd, Sm, Eu, Gd, Tb, Dy, Ho, Er, Tm, Yb, and Lu,
A1 and A3 represent different elements,
x represents a number satisfying a condition 0<x<1.5, provided that cases where x=1.0 are excluded, and
O represents the oxygen atom.

With the garnet type compound having the aforesaid constitution in accordance with the present invention, the substituent ions, which have an ionic radius larger than the ionic radius of the substitutable ions of the garnet type compound acting as the matrix compound, are capable of easily forming the solid solution in the matrix compound. With the garnet type compound having the aforesaid constitution in accordance with the present invention, in cases where a comparison is made with conventional compositions on the basis of an identical doping concentration of an identical kind of the luminescent element ions in a system for doping the luminescent element ions, such as the Pr ions, the luminescence intensity is capable of being enhanced than with the conventional compositions.

The present invention will hereinbelow be described in further detail with reference to the accompanying drawings.

### BRIEF DESCRIPTION OF THE DRAWINGS

Figure 1 is a sectional view showing an embodiment of the light emitting device in accordance with the present invention, the view being taken in a thickness direction of a circuit base plate,
Figure 2 is a plan view showing an example of design modification of the light emitting device in accordance with the present invention, the view being taken from the side of a light emitting element,
Figure 3 is an explanatory view showing an embodiment of the solid laser device in accordance with the present invention,
Figure 4 is an explanatory view showing an example of design modification of the solid laser device in accordance with the present invention,
Figure 5 is an explanatory view showing a different example of design modification of the solid laser device in accordance with the present invention,
Figure 6 is an explanatory view showing a further different example of design modification of the solid laser device in accordance with the present invention,
Figure 7 is a graph showing results of powder X-ray diffraction measurements, which results were obtained in Example 1 and Comparative Examples 1 and 2,
Figure 8 is a graph showing relationships between a Pr doping concentration and a lattice constant, which relationships were obtained in Examples 1, 2, and 3 and Comparative Examples 1, 2, 5, and 6,
Figure 9 is a graph showing luminescence spectrums (fluorescence spectrums), which were obtained in Example 1 and Comparative Examples 2 and 7,
Figure 10 is a graph showing relationships between a Pr doping concentration and a luminescence intensity, which relationships were obtained in Examples 1, 2, and 3 and Comparative Examples 2, 3, 4, 5, and 6, and
Figure 11 is a graph showing relationships between ionic radiuses of rare earth elements, which are contained in garnet type compounds, and lattice constants of the garnet type compounds.

### DETAILED DESCRIPTION OF THE INVENTION

### [Garnet type compound in accordance with the present invention]

As described above in detail, the garnet type compound in accordance with the present invention has been obtained from the material designing made with attention being paid to the balance of the ionic radius and the valence number of ion. The garnet type compound in accordance with the present invention may be represented by the general formula:

A1(III)₃₋₂ₓA2(II)ₓA3(III)ₓB(III)₂C1(III)₃₋ₓC2(IV)ₓO₁₂

wherein each of the Roman numerals in the parentheses represents the valence number of ion,
each of A1, A2, and A3 represents the element at the A site,
B represents the element at the B site,
each of C1 and C2 represents the element at the C site,
each of A1, A2, B, C1, and C2 represents at least one kind of element exhibiting the corresponding valence number of ion defined above,
A3 represents at least one kind of element selected from the group consisting of trivalent rare earth elements of La, Ce, Pr, Nd, Sm, Eu, Gd, Tb, Dy, Ho, Er, Tm, Yb, and Lu,
A1 and A3 represent different elements,
x represents a number satisfying a condition 0<x<1.5, provided that cases where x=1.0 are excluded, and
O represents the oxygen atom.

The aforesaid garnet type compound in accordance with the present invention is of the system, in which A1 (III) acts as the substitutable ions contained in the matrix compound, and in which a part of A1 (III) is substituted by A3(III). The aforesaid garnet type compound in accordance with the present invention is the compound obtained from the processing, in which A2 (II) andC2 (IV) are simultaneously subjected to the formation of the solid solution at the time of the formation of the solid solution of A3 (III). In the aforesaid garnet type compound in accordance with the present invention, A2 (II), A3 (III), and C2 (IV) are contained in equimolar quantities. In cases where the constitution described above is employed, good relationship between the ionic radius and the valence number of ion is capable of being obtained.

The garnet type compound in accordance with the present invention embraces both the a luminescent compound, which contains the luminescent element ions, such as the Pr ions, and the non-luminescent compound, which does not contain the luminescent element ions.

The garnet type compound in accordance with the present invention should preferably be modified such that A1 (III) represents at least one kind of element selected from the group consisting of Y, Sc, and In.

Also, the garnet type compound in accordance with the present invention should preferably be modified such that A1 (III) represents at least one kind of element selected from the group consisting of Y, Sc, and In,
A2(II) represents at least one kind of element selected from the group consisting of Mg, Ca, Sr, and Mn,
B(III) represents at least one kind of element selected from the group consisting of Al, Sc, Ga, Cr, In, and trivalent rare earth elements of La, Ce, Pr, Nd, Sm, Eu, Gd, Tb, Dy, Ho, Er, Tm, Yb, and Lu,
C1(III) represents at least one kind of element selected from the group consisting of Al and Ga, and
C2(IV) represents at least one kind of element selected from the group consisting of Si and Ge.

In such cases, the garnet type compound in accordance with the present invention may be the garnet type compound (Pr-Mg-Si-YAG), wherein A1(III) represents Y,
A2(II) represents Mg,
A3(III) represents Pr,
B(III) represents Al,
C1(III) represents Al, and
C2(IV) represents Si.

The material designing of the garnet type compound in accordance with the present invention will be described hereinbelow with the Pr-Mg-Si-YAG compound being taken as an example.

As described above in detail with reference to the related art, since the ionic radius of Pr is large, it has heretofore been not always possible to perform the doping of Pr into YAG. It is presumed that, in cases where the Pr ions having the large ionic radius try to enter into the comparatively narrow space at the A site, a large lattice strain will occur, and consequently the crystal structure of the matrix compound will not be capable of being kept.

With the material designing of the garnet type compound in accordance with the present invention, at the same time as the Pr³⁺ ions (ionic radius r2 (A site) = 0.1126nm), the Mg²⁺ ions (ionic radius r3 (A site) = 0.089nm) having an ionic radius smaller than the ionic radius of the Y³⁺ ions are subj ected to the formation of the solid solution in YAG. Therefore, a spatial margin is capable of arising at the A site in YAG, and Pr is capable of easily forming the solid solution in YAG. Also, with the material designing of the garnet type compound in accordance with the present invention, at the time of the formation of the solid solution of Pr and Mg in YAG, the quadrivalent Si is simultaneously subjected to the formation of the solid solution. As a result, the electric charge compensation is capable of being made between the Mg²⁺ ions and the Si⁴⁺ ions, and the valence number of Pr is capable of being kept at 3. The alteration of the valence number of Pr to 4 is thus capable of being suppressed, and the valence number of Pr is capable of being kept at 3. Accordingly, the luminescence characteristics of Pr as designed are capable of being obtained. It is presumed that, since the Si⁴⁺ ions (ionic radius (C site) = 0.026nm) have an ionic radius smaller than the ionic radius of the Al³⁺ ions (ionic radius (C site) = 0.039nm), a part of Al constituting the C site of YAG is substituted by Si. Also, it is considered that, since both the Mg²⁺ ions and the Si⁴⁺ ions are the non-luminescent element ions, the doping of the Mg²⁺ ions and the Si⁴⁺ ions simultaneous with Pr will not affect the luminescence characteristics.

In accordance with the designing idea described above, the inventors have found that, in cases where Pr, Mg, and Si are simultaneously subjected to the formation of the solid solution in YAG, it becomes easy for Pr to form the solid solution in YAG. The inventors have also found that, when a comparison is made, on the basis of an identical Pr doping concentration, between the aforesaid cases, wherein Pr, Mg, and Si are simultaneously subjected to the formation of the solid solution in YAG, and the cases wherein Mg and Si are not simultaneously subjected to the formation of the solid solution in YAG, the lattice constant becomes markedly smaller in the aforesaid cases, wherein Pr, Mg, and Si are simultaneously subjected to the formation of the solid solution in YAG, than in the cases wherein Mg and Si are not simultaneously subjected to the formation of the solid solution in YAG (as will be described later with reference to Figure 8). It has thus been found that the effect of suppressing the lattice expansion is capable of being obtained in the aforesaid cases, wherein Pr, Mg, and Si are simultaneously subjected to the formation of the solid solution in YAG. The effects described above are considered to represent that the spatial strain in the vicinity of Pr is relaxed by the simultaneous formation of the solid solution of Mg and Si.

Also, the inventors have found that, when a comparison is made on the basis of an identical Pr doping concentration, the Pr-Mg-Si-YAG compound, which is obtained from the processing for subjecting Pr, Mg, and Si simultaneously to the formation of the solid solution in YAG (as will be described later in Example 1), exhibits a luminescence intensity (a fluorescence intensity) higher than the luminescence intensity obtainable with the Pr-YAG compound, in which Mg and Si are not subj ected to the formation of the solid solution (as will be described later in Comparative Example 2), and the luminescence intensity obtainable with a Pr-Mg-YAG compound, in which Mg is subjected to the formation of the solid solution and in which Si is not subjected to the formation of the solid solution (as will be described later in Comparative Example 7). (The aforesaid effects of enhancing the luminescence intensitywill be described later with reference to Figure 9). The inventors presumes that the aforesaid effects of enhancing the luminescence intensity are obtained as a result of the relaxation of the spatial strain in the vicinity of Pr, which relaxation is caused to occur by the simultaneous formation of the solid solution of Mg and Si.

The Pr-Mg-Si-YAG compound has the effects described above. The same effects as those described are also capable of being obtained with various other garnet type compounds in accordance with the present invention, which have the compositions satisfying the conditions represented by the general formula shown above.

As described above, in, for example, the literature of J. Li et al., Jpn. J. Appl. Phys., Vol. 44, p. L708, 2005, it is reported that the doping of Mg in Pr-BaTiO₃ leads to an increase in luminescence intensity. (As described above, the experiments described in the aforesaid literature do not concern the material designing, which is made from both the ionic radius and the electric charge compensation as in the idea in accordance with the present invention.)

The inventors consider that, with the system described in the aforesaid literature, energy having been excited on the side of wavelengths shorter than the absorption edge wavelength of BaTiO₃ acting as the matrix compound transfers easily to the excitation level of Pr, and the luminescence is thereby enhanced.

However, in the cases of a matrix compound, such as YAG, which exhibits a markedly short absorption edge wavelength (i.e., which exhibits a large band gap), the matrix compound does not absorb the exciting light, and therefore the energy transfer to Pr does not occur. Nevertheless, with the material designing of the garnet type compound in accordance with the present invention, the luminescence intensity is capable of being enhanced also in cases where YAG, which is the high-gap matrix compound, is employed as the matrix compound. The material designing of the garnet type compound in accordance with the present invention is thus the novel technique for enhancing the luminescence intensity. The material designing of the garnet type compound in accordance with the present invention is also applicable to systems, in which the enhancement of the luminescence intensity is ordinarily difficult. The material designing of the garnet type compound in accordance with the present invention thus has a high technical value.

As described above, the material designing of the garnet type compound in accordance with the present invention is efficient particularly for systems, such as Pr-YAG, in which the high-concentration doping of the luminescent element ions is ordinarily difficult and in which the enhancement of the luminescence intensity is ordinarily difficult.

### [Inorganic compound in accordance with the present invention]

The idea itself of the material designing in accordance with the present invention is the novel idea. Besides the garnet type compound, the idea of the material designing in accordance with the present invention is also applicable to a system, in which a part of substitutable ions of the matrix compound are to be substituted by the substituent ions having an ionic radius larger than the ionic radius of the substitutable ions. The inorganic compound having been designed in accordance with the material designing in accordance with the present invention is a novel compound.

Specifically, the inorganic compound in accordance with the present invention is characterized by containing the solid solution having been formed by the substitution of a part of the substitutable ions (a) contained in the matrix compound, which substitutable ions (a) have the ionic radius r1, by the luminescent element ions (b) exhibiting the valence number of ion of n, which luminescent element ions (b) have the ionic radius r2 larger than the ionic radius r1 of the substitutable ions (a), where r2>r1,
the formation of the solid solution of the luminescent element ions (b) being performed with the processing, in which the at least one kind of the first non-luminescent element ions (c) and the at least one kind of the second non-luminescent element ions (d) are simultaneously subjected to the formation of the solid solution,
the at least one kind of the first non-luminescent element ions (c) exhibiting the valence number of ion of a and having the ionic radius r3 smaller than the ionic radius r1 of the substitutable ions (a), where r3<r1,
the at least one kind of the second non-luminescent element ions (d) exhibiting the valence number of ion of b, where b satisfies the condition a+b=2n.

The inorganic compound in accordance with the present invention should preferably be modified such that the first non-luminescent element ions (c) and the second non-luminescent element ions (d) are subj ected in equimolar quantities to the formation of the solid solution. In cases where the constitution described above is employed, the electric charge balance becomes particularly good. If the molar quantity of the first non-luminescent element ions (c) and the molar quantity of the second non-luminescent element ions (d) vary markedly under the condition satisfying a+b=2n, the electric charge balance will become bad, and there will be the risk that oxygen defects and variation of the valence number of the luminescent element ions (b) will be caused to occur.

There is the possibility that, in cases where the blending of raw materials is performed such that the number of mols of the first non-luminescent element ions (c) and the number of mols of the second non-luminescent element ions (d) may become equimolar with one another, the number of mols of the of the first non-luminescent element ions (c) and the number of mols of the second non-luminescent element ions (d) in the ultimately prepared compound will slightly deviate from 1:1. Therefore, it is herein regarded that, in cases where the number of mols of the of the first non-luminescent element ions (c) and the number of mols of the second non-luminescent element ions (d) are such that the number of mols of one of the two kinds of the non-luminescent element ions falls within the range of 0.9 to 1.1 times as large as the number of mols of the other kind of the non-luminescent element ions, the first non-luminescent element ions (c) and the second non-luminescent element ions (d) are contained in the quantities equimolar with each other.

The inorganic compound in accordance with the present invention should more preferably be modified such that the luminescent element ions (b), the first non-luminescent element ions (c), and the second non-luminescent element ions (d) are subjected in equimolar quantities to the formation of the solid solution. With the material designing in accordance with the present invention, the luminescent element ions (b) having the large ionic radius and the first non-luminescent element ions (c) having the small ionic radius are subjected together with each other to the formation of the solid solution, and the total lattice strain is thereby suppressed. If either one of the two kinds of the luminescent element ions (b) and the first non-luminescent element ions (c) is in excess of the other kind of ions, there is the risk that the lattice strain will become large.

Also, the inorganic compound in accordance with the present invention should preferably be modified such that the valence number of ion of a of the first non-luminescent element ions (c) satisfies a condition a=n-1, and the valence number of ion of b of the second non-luminescent element ions (d) satisfies a condition b=n+1. With the constitution described above, i.e. with the constitution in which the valence number of ion of n of the luminescent element ions (b), the valence number of ion of a of the first non-luminescent element ions (c), and the valence number of ion of b of the second non-luminescent element ions (d) do not markedly vary from one another, the element ions described above are considered to be capable of being present in a stable manner in the crystal lattice. For example, in cases where the valence number of ion of n of the luminescent element ions (b) is 3, if the first non-luminescent element ions (c) and the second non-luminescent element ions (d) having a valence of 1 or 7 are subjected together to the formation of the solid solution, there is the risk that the element ions having the valence of 1 or 7 will be unstable and will not be capable of being present in a stable manner in the crystal lattice.

Further, the inorganic compound in accordance with the present invention should preferably be modified such that the valence number of ion of the substitutable ions (a) is equal to the valence number of ion of n of the luminescent element ions (b). In cases where the constitution described above is employed, from the view point of the electric charge balance, it is considered that the substitutable ions (a) wil lbe capable of being substituted appropriately by the luminescent element ions (b).

Furthermore, the inorganic compound in accordance with the present invention should preferably be modified such that a lattice sitepositionof the secondnon-luminescent element ions (d) isdifferent from the lattice site positions of the substitutable ions (a) and the luminescent element ions (b). With the constitution described above, a large lattice space for the entry of the luminescent element ions (b) is capable of being obtained, and high-concentration doping becomes possible.

Also, the inorganic compound in accordance with the present invention shouldpreferablybemodified such that an ionic concentration of the luminescent element ions (b) should preferably fall within the range of over 0 mol% to 3 mol%, inclusive.

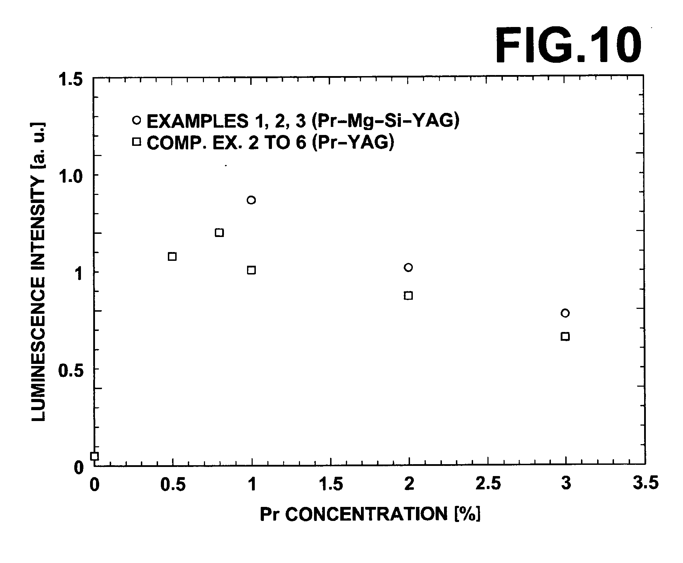

As indicated by the evaluation results obtained in Examples 1, 2, and 3, which evaluation results are illustrated in Figure 8 and Figure 10, as for the Pr-Mg-Si-YAG compound, in cases where the ionic concentration of the Pr ions, which act as the luminescent element ions (b), is set to fall within the range described above, the lattice strain is capable of being suppressed appropriately, and the luminescence of a high luminance is capable of being obtained. The inventors have found that, besides the Pr-Mg-Si-YAG compound, the inorganic compound in accordance with the present invention is capable of having the same effects as those described above in cases where ionic concentration of the luminescent element ions (b) is set to fall within the range described above.

Further, the inorganic compound in accordance with the present invention should preferably be modified such that the valence number of ion of n of the luminescent element ions (b) is 3.

As described above, the valence number of ion of a of the first non-luminescent element ions (c) should preferably satisfy the condition a=n-1, and the valence number of ion of b of the second non-luminescent element ions (d) should preferably satisfy the condition b=n+1. Therefore, in cases where the valence number of ion of n of the luminescent element ions (b) is 3, the inorganic compound in accordance with the present invention should more preferably be modified such that the valence number of ion of a of the first non-luminescent element ions (c) is 2, and the valence number of ion of b of the second non-luminescent element ions (d) is 4.

Examples of the matrix compounds for the constitution of the inorganic compound in accordance with the present invention include the matrix compounds M1 to M10 described below. (Matrix compound M1) A garnet type compound, which may be represented by the general formula:

A(III)₃B(III)₂C(III)₃O₁₂

wherein each of the Roman numerals in the parentheses represents the valence number of ion,
A represents the element at the A site and represents at least one kind of element selected from the group consisting of Y, Sc, In, and trivalent rare earth elements of La, Ce, Pr, Nd, Sm, Eu, Gd, Tb, Dy, Ho, Er, Tm, Yb, and Lu,
B represents the element at the B site and represents at least one kind of element selected from the group consisting of Al, Sc, Ga, Cr, In, and trivalent rare earth elements of La, Ce, Pr, Nd, Sm, Eu, Gd, Tb, Dy, Ho, Er, Tm, Yb, and Lu,
C represents the element at the C site and represents at least one kind of element selected from the group consisting of Al and Ga, and
O represents the oxygen atom.

Byway of example, the matrix compound M1 maybe a Y₃Al₅O₁₂ compound (YAG).

In cases where the matrix compound is the matrix compound M1, which is the garnet type compound shown above, the valence number of ion of the substitutable ions (a) is 3, the valence number of ion of the luminescent element ions (b) is 3, the valence number of ion of the first non-luminescent element ions (c) is 2, and the valence number of ion of the secondnon-luminescent element ions (d) is 4, the inorganic compound in accordance with the present invention constitutes the garnet type compound, which may be represented by the general formula:

A1(III)₃₋₂ₓA2(II)ₓA3(III)ₓB(III)₂C1(III)₃₋ₓC2(IV)ₓO₁₂

wherein each of the Roman numerals in the parentheses represents the valence number of ion,
each of A1, A2, and A3 represents the element at the A site,
B represents the element at the B site,
each of C1 and C2 represents the element at the C site,
each of A1, A2, B, C1, and C2 represents at least one kind of element exhibiting the corresponding valence number of ion defined above,
A3 represents at least one kind of element selected from the group consisting of trivalent rare earth elements of Ce, Pr, Nd, Sm, Eu, Gd, Tb, Dy, Ho, Er, Tm, and Yb,
A1 and A3 represent different elements,
x represents a number satisfying a condition 0<x<1.5, provided that cases where x=1.0 are excluded, and
O represents the oxygen atom.

With the composition, in which A3 represents La and/or Lu in the general formula shown above, the luminescence is not produced. Therefore, the composition, in which A3 represents La and/or Lu, is excluded from the general formula shown above.

In the general formula shown above, the substitutable ions (a) are A1(III), the luminescent element ions (b) are A3(III), the first non-luminescent element ions (c) are A2(II), and the second non-luminescent element ions (d) are C2(IV).

By way of example, the combination of the kinds of the ions may be the combination, in which the substitutable ions (a) are Y³⁺ ions, the luminescent element ions (b) are Pr³⁺ ions, the first non-luminescent element ions (c) are Mg²⁺ ions, and the second non-luminescent element ions (d) are Si⁴⁺ ions. (In such cases, the compound is the Pr-Mg-Si-YAG compound.
(Matrix compound M2) A C rare earth type compound, which may be represented by the general formula:

   R(III)₂O₃

   wherein the Roman numeral in the parenthesis represents the valence number of ion,
   R represents at least one kind of element selected from the group consisting of Y and trivalent rare earth elements of La, Ce, Pr, Nd, Sm, Eu, Gd, Tb, Dy, Ho, Er, Tm, Yb, and Lu, and
   O represents the oxygen atom.
(Matrix compound M3) A perovskite type compound, which may be represented by the general formula:

   A(II)B(IV)O₃

   wherein each of the Roman numerals in the parentheses represents the valence number of ion,
   A represents the element at the A site and represents at least one kind of element selected from the group consisting of Ba, Sr, Ca, Mg, and Pb,
   B represents the element at the B site and represents at least one kind of element selected from the group consisting of Ti, Zr, Hf, Th, Sn, and Si, and
   O represents the oxygen atom.
(Matrix compound M4) A perovskite type compound, which may be represented by the general formula:

   A(I)B(V)O₃

   wherein each of the Roman numerals in the parentheses represents the valence number of ion,
   A represents the element at the A site and represents at least one kind of element selected from the group consisting of Li, Na, and K,
   B represents the element at the B site and represents at least one kind of element selected from the group consisting of V, Nb, and Ta, and
   O represents the oxygen atom.
(Matrix compound M5) A perovskite type compound, which may be represented by the general formula:

   A(II)B1(II)_{1/2}B2(VI)_{1/2}O₃

   wherein each of the Roman numerals in the parentheses represents the valence number of ion,
   A represents the element at the A site and represents at least one kind of element exhibiting a total valence number of ion of 2,
   B1 represents the element at the B site and represents at least one kind of element selected from the group consisting of Fe, Cr, Co, and Mg,
   B2 represents the element at the B site and represents at least one kind of element selected from the group consisting of W, Mo, Re, and Os, and
   O represents the oxygen atom.
(Matrix compound M6) A perovskite type compound, which may be represented by the general formula:

   A(II)B1(III)_{2/3}B2(VI)_{1/3}O₃

   wherein each of the Roman numerals in the parentheses represents the valence number of ion,
   A represents the element at the A site and represents at least one kind of element exhibiting a total valence number of ion of 2,
   B1 represents the element at the B site and represents at least one kind of element selected from the group consisting of In, Sc, Y, Cr, Fe, and trivalent rare earth elements of La, Ce, Pr, Nd, Sm, Eu, Gd, Tb, Dy, Ho, Er, Tm, Yb, and Lu,
   B2 represents the element at the B site and represents at least one kind of element selected from the group consisting of W, Mo, and Re, and
   O represents the oxygen atom.
(Matrix compound M7) A perovskite type compound, which may be represented by the general formula:

   A(II)B1(III)_{1/2}B2(V)_{1/2}O₃

   wherein each of the Roman numerals in the parentheses represents the valence number of ion,
   A represents the element at the A site and represents at least one kind of element exhibiting a total valence number of ion of 2,
   B1 represents the element at the B site and represents at least one kind of element selected from the group consisting of Sc, Fe, Bi, Mn, Cr, In, Ga, Ca, and trivalent rare earth elements of La, Ce, Pr, Nd, Sm, Eu, Gd, Tb, Dy, Ho, Er, Tm, Yb, and Lu,
   B2 represents the element at the B site and represents at least one kind of element selected from the group consisting of Nb, Ta, Os, and Sb, and
   O represents the oxygen atom.
(Matrix compound M8) A perovskite type compound, which may be represented by the general formula:

   A(II)B1(II)_{1/3}B2(V)_{2/3}O₃

   wherein each of the Roman numerals in the parentheses represents the valence number of ion,
   A represents the element at the A site and represents at least one kind of element exhibiting a total valence number of ion of 2,
   B1 represents the element at the B site and represents at least one kind of element selected from the group consisting of Mg, Co, Ni, Zn, Fe, Pb, Sr, and Ca,
   B2 represents the element at the B site and represents at least one kind of element selected from the group consisting of Nb and Ta, and
   O represents the oxygen atom.
   (Matrix compound M9) A compound (referred to as the perovskite type compound or the GdFeO₃ type compound), which may be represented by the general formula:

   A(III)B(III)O₃

   wherein each of the Roman numerals in the parentheses represents the valence number of ion,
   A represents the element at the A site and represents at least one kind of element selected from the group consisting of Y, La, Gd, and Bi,
   B represents the element at the B site and represents at least one kind of element selected from the group consisting of Al, Sc, V, Cr, Fe, Co, Ga, and Y, and
   O represents the oxygen atom.
(Matrix compound M10) A compound (referred to as the perovskite type compound or the GdFeO₃ type compound), which may be represented by the general formula:

   A(III)B(III)O₃

   wherein each of the Roman numerals in the parentheses represents the valence number of ion,
   A represents the element at the A site and represents at least one kind of element selected from the group consisting of Ce, Pr, Nd, Sm, and Eu,
   B represents the element at the B site and represents at least one kind of element selected from the group consisting of Al, Sc, V, Cr, Fe, Co, Ga, and Y, and
   O represents the oxygen atom.

In cases where the matrix compound M10 is employed, the luminescent element ions (b) should be of an element different from the elements constituting the matrix compound.

The inorganic compound in accordance with the present invention contains the solid solution having been formed by the substitution of a part of the substitutable ions (a) contained in the matrix compound, which substitutable ions (a) have the ionic radius r1, by the luminescent element ions (b) exhibiting the valence number of ion of n, which luminescent element ions (b) have the ionic radius r2 larger than the ionic radius r1 of the substitutable ions (a), where r2>r1,
the formation of the solid solution of the luminescent element ions (b) being performed with the processing, in which the at least one kind of the first non-luminescent element ions (c) and the at least one kind of the second non-luminescent element ions (d) are simultaneously subjected to the formation of the solid solution,
the at least one kind of the first non-luminescent element ions (c) exhibiting the valence number of ion of a and having the ionic radius r3 smaller than the ionic radius r1 of the substitutable ions (a), where r3<r1,
the at least one kind of the second non-luminescent element ions (d) exhibiting the valence number of ion of b, where b satisfies the condition a+b=2n.

In cases where the material designing of the inorganic compound in accordance with the present invention is made in the manner described above, it becomes easy for the luminescent element ions (b), which have the large ionic radius and are ordinarily not easy to form the solid solution, to form the solid solution. Also, the high-concentration doping of the luminescent element ions (b) is capable of being performed, such that the lattice strain may be suppressed, and such that the valence number of ion of the luminescent element ions (b) may not alter.

### [Crystal structure and process for production]

Each of the aforesaid garnet type compound in accordance with the present invention and the inorganic compound in accordance with the present invention may have a single crystalline structure or a polycrystalline structure and may contain inevitable impurities. Also, each of the aforesaid garnet type compound in accordance with the present invention and the inorganic compound in accordance with the present invention should preferably be of a single phase as a whole. However, each of the aforesaid garnet type compound in accordance with the present invention and the inorganic compound in accordance with the present invention may contain a heterogeneous phase within a range such that the characteristics may not be affected.

Examples of techniques for growing single crystals include a drawing-up technique (a Czochralski technique, a CZ technique) , a melt seal drawing-up technique (an LEC technique), an EFG technique, a Bridgman' s technique (a BS technique) , a Verneuil technique, a floating zone technique (an FZ technique), a hydrothermal synthesis technique, a flux technique, and a micro drawing-down technique.

The inorganic compound having a polycrystalline structure may take on the form of a polycrystal sintered body having been obtained from processing, in which raw material particles are molded into a predetermined shape and sintered. Alternatively, the inorganic compound having a polycrystalline structure may take on the form of particles of the polycrystal sintered body, which particles have been obtained from grinding processing.

### [Composition in accordance with the present invention]

The composition in accordance with the present invention is characterized by containing the garnet type compound in accordance with the present invention or the inorganic compound in accordance with the present invention.

The composition in accordance with the present invention may also contain an arbitrary constituent (e.g., a resin) other than the compound in accordance with the present invention.

### [Molded body in accordance with the present invention]

The molded body in accordance with the present invention is characterized by containing the garnet type compound in accordance with the present invention or the inorganic compound in accordance with the present invention.

In cases where the production easiness, the flexibility in shape designing, the cost, and the like, are taken into consideration, the molded body in accordance with the present invention should preferably be constituted of:
(a) the polycrystal sintered body, which contains the compound in accordance with the present invention, or
(b) the molded body having been obtained from the processing,
in which the particles of the polycrystal sintered body (described above under (a)) having been obtained from the grinding processing are bound together by a binder and are molded.

No limitation is imposed upon the kind of the binder described above. However, the binder should preferably be a light transmissive resin, such as an acrylic resin (a PMMA resin) containing a homopolymer or a copolymer of (meth) acrylic acid and/or an ester of (meth) acrylic acid.

The compound in accordance with the present invention embraces the luminescent compound and the non-luminescent compound. In cases where the molded body in accordance with the present invention contains the luminescent compound in accordance with the present invention, which is capable of producing the luminescence when being excited by the exciting light, the molded body in accordance with the present invention acts as a luminescent body and is capable of being utilized in a wide variety of use applications.

In cases where the compound in accordance with the present invention is a laser substance, which is capable of producing a laser beam by being excited by the exciting light, the molded body in accordance with the present invention, which contains the compound in accordance with the present invention acting as the laser substance, acts as a laser medium and is capable of being utilized in a wide variety of use applications.

For example, the Pr-Mg-Si-YAG compound, which is the compound in accordance with the present invention, acts the luminescent compound and the laser substance. The excitation wavelengths for the Pr-Mg-Si-YAG compound fall within the range of 420nm to 500nm. The Pr-Mg-Si-YAG compound exhibits the luminescence peak wavelength falling within the range of 450nm to 700nm (the visible light wavelength range).

### [Light emitting device in accordance with the present invention]

The light emitting device in accordance with the present invention comprises:
i) the luminescent body constituted of the molded body containing the aforesaid luminescent compound in accordance with the present invention, and
ii) the exciting light source for producing the exciting light to be irradiated to the luminescent body.

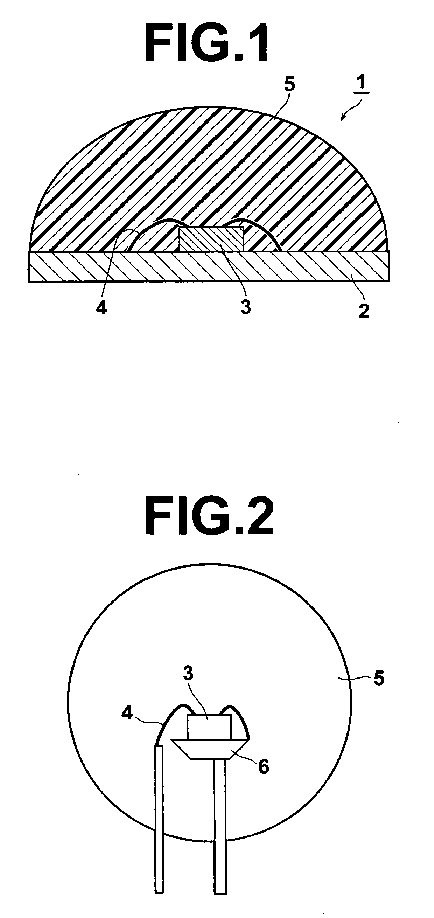

An embodiment of the light emitting device in accordance with the present invention will be described hereinbelow with reference to Figure 1. Figure 1 is a sectional view showing an embodiment of the light emitting device in accordance with the present invention, the view being taken in a thickness direction of a circuit base plate 2.

A light emitting device 1, which is an embodiment of the light emitting device in accordance with the present invention comprises the circuit base plate 2 having a circular disk-like shape. The light emitting device 1 in accordance with the present invention also comprises a light emitting element 3 acting as the exciting light source. The light emitting element 3 is located at the middle of the surface of the circuit base plate 2. The light emitting device 1 in accordance with the present invention further comprises a dome-shaped luminescent body 5, which has been molded on the circuit base plate 2 so as to surround the light emitting element 3.

The light emitting element 3 for producing the exciting light to be utilized for exciting the luminescent body 5 is constituted of a semiconductor light emitting diode, or the like. The light emitting element 3 is electrically connected to the circuit base plate 2 by a bonding wire 4.

In this embodiment, the luminescent body 5 is constituted of the molded body having been obtained from the processing, wherein the particles of the polycrystal sintered body of the luminescent compound in accordance with the present invention, which particles have been obtained from the grinding processing, are bound together by the binder and are molded.

In this embodiment, the luminescent body 5 is prepared in the manner described below. Specifically, a polycrystal sintered body of a 1.0% Pr-Mg-Si-YAG compound is subjected to the grinding processing in a mortar, and the particles of the aforesaid polycrystal sintered body are thereby obtained. (The 1.0% Pr-Mg-Si-YAG compound may be prepared in the same manner as that in Example 1, which will be described later. The proportion of 1.0% represents the Pr doping concentration expressed in terms of mol%.) Thereafter, the particles having been obtained from the grinding processing are subjected to kneading processing together with a polymethyl acrylate resin (a PMMA resin), which acts as the binder, in a resin melt state. From the kneading processing, a mixture of the particles of the polycrystal sintered body of the Pr-Mg-Si-YAG compound and the PMMA resin (Pr-Mg-Si-YAG: PMMA resin = 3:4 (mass ratio)) is obtained. The circuit base plate 2, on which the light emitting element 3 has been located, is then located in a mold, and the aforesaid mixture is subjected to injection molding and molded on the circuit base plate 2.

The excitation wavelengths for the luminescent body 5 fall within the range of 420nm to 500nm. Therefore, the light emitting element 3 acting as the exciting light source should preferably be constituted of a semiconductor light emitting diode, which exhibits an oscillation peak wavelength falling within the range of 360nm to 500nm, or the like. Specifically, the light emitting element 3 should preferably be constituted of, for example, a nitride type of semiconductor light emitting diode provided with an active layer, which contains at least one kind of nitrogen-containing semiconductor compound, such as GaN, AlGaN, InGaN, InGaNAs, or GaNAs.

In cases where the combination of the light emitting element 3, which acts as the exciting light source, and the luminescent body 5, which contains the 1.0% Pr-Mg-Si-YAG compound, is employed, the luminescent body 5 produces the luminescence of a color tone different from the color tone of the light radiated out from the light emitting element 3. As a result, light (specifically, blue to red mixed color light), which is of the mixed color of the light radiated out from the light emitting element 3 and the luminescence produced by the luminescent body 5, is radiated out from the light emitting device 1.

The inventors have confirmed that light having a luminance higher than the luminance obtained with a 1.0% Pr-YAG compound (as will be described later in Comparative Example 2) is capable of being obtained.

With this embodiment of the light emitting device 1, the color tone of the luminescence is capable of being adjusted and altered by, for example, an alteration of the Pr doping concentration in the Pr-Mg-Si-YAG compound, utilization of a compound, which employs other luminescent element ions exhibiting an absorption band different from the absorption band of Pr, in lieu of the Pr-Mg-Si-YAG compound, or an alteration of the exciting light source.

This embodiment of the light emitting device 1 is provided with the luminescent body 5, which is constituted of the molded body containing the luminescent compound in accordance with the present invention. Therefore, with this embodiment of the light emitting device 1, the effects for enhancing the luminescence intensity are capable of being obtained. The light emitting device 1 is capable of being utilized appropriately as a photoluminescence device, and the like.

### (Examples of design modification)

The light emitting device in accordance with the present invention is not limited to the embodiment described above, and the device constitution may be modified in various ways. For example, as illustrated in Figure 2, a luminescent body 5' may be molded into a circular disk-like shape, and a mounting block 6 may be located so as to protrude from the surface of the luminescent body 5'. Also, the light emitting element 3 acting as the exciting light source may be located on the mounting block 6. Figure 2 is a plan view showing an example of design modification of the light emitting device in accordance with the present invention, the view being taken from the side of the light emitting element 3.

With the constitution illustrated in Figure 2, the light emitting device is capable of being constituted without the circuit base plate 2 being utilized. Therefore, light is capable of being obtained from opposite sides of the luminescent body 5' (i.e., from both the side of the light emitting element 3 and the opposite side).

In the aforesaid embodiment of the light emitting device 1, the luminescent body 5 is constituted of the mixture of the Pr-Mg-Si-YAG compound and the PMMA resin and has the light transmissive characteristics. With the constitution described above, the luminescence is capable of being produced from the entire region of the luminescent body 5, and a high luminescence intensity is capable of being obtained.

Alternatively, the luminescent body 5 may be constituted of the polycrystal sintered body of the Pr-Mg-Si-YAG compound. In cases where the process for producing the polycrystal sinteredbody is devised, a polycrystal sintered body having good transparency characteristics is capable of being obtained (as will be described later in Example 4). As another alternative, the luminescent body 5 may be constituted of a single crystal of the Pr-Mg-Si-YAG compound.

As a further alternative, the luminescent body 5 may have a constitution, which does not have the light transmissive characteristics. (Specifically, for example, the luminescent body 5 may be constituted of a light non-transmissive polycrystal sintered body or a molded body obtained from processing, in which the particles of a polycrystal sintered body having been obtained from the grinding processing are bound together by a light non-transmissive binder and molded.) In cases where the luminescent body 5 does not have the light transmissive characteristics, the luminescence is capable of being obtained only from the surface of the luminescent body 5.

### [Solid laser device in accordance with the present invention]

The solid laser device in accordance with the present invention comprises:
i) the solid laser medium constituted of the molded body containing the compound in accordance with the present invention, which compound is capable of producing the laser beam by being excited by the exciting light, and
ii) the exciting light source for producing the exciting light to be irradiated to the solid laser medium.

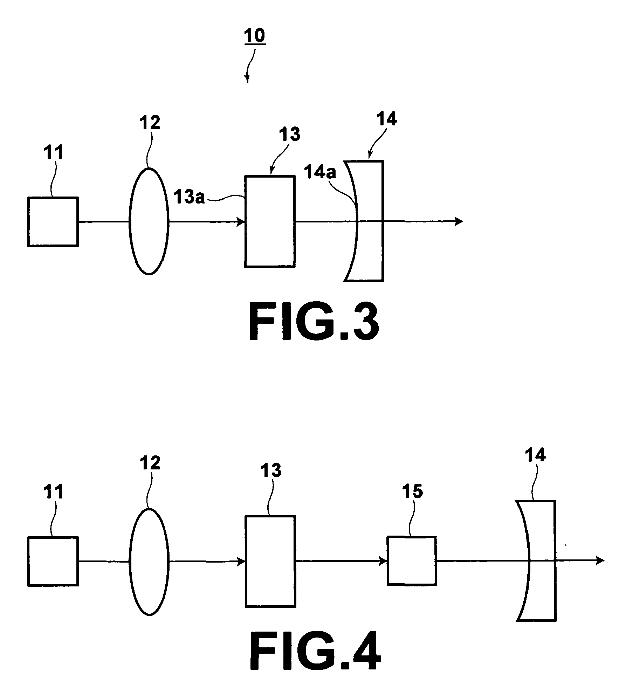

An embodiment of the solid laser device in accordance with the present invention will be describedhereinbelowwith reference to Figure 3.

A solid laser device 10, which is an embodiment of the solid laser device in accordance with the present invention, is constituted as a laser diode pumped solid laser device. The laser diode pumped solid laser device comprises a solid laser medium 13 constituted of the molded body containing the compound in accordance with the present invention, which compound is capable of producing the laser beam by being excited by the exciting light (in this case, pumping light). The solid laser device 10 also comprises a semiconductor laser diode 11 acting as an exciting light source (in this case, a pumping light source) for producing the exciting light (in this case, the pumping light) to be irradiated to the solid laser medium 13.

Also, a converging lens 12 is located between the semiconductor laser diode 11 and the solid laser medium 13. Further, an output mirror 14 is located at the stage after the solid laser medium 13.

An exciting light incidence surface 13a of the solid laser medium 13 is provided with a coating layer, which transmits light having wavelengths falling within the excitation wavelength range, and which reflects light having output wavelengths. Also, a light incidence surface 14a of the output mirror 14 is provided with a coating layer, which transmits part of the light having the output wavelengths, and which reflects light having the other wavelengths. A resonator structure is constituted between the exciting light incidence surface 13a of the solid laser medium 13 and the light incidence surface 14a of the output mirror 14.

In this embodiment, the solid laser medium 13 is constituted of a polycrystal sintered body of a 1.0% Pr-Mg-Si-YAG compound having good transparency characteristics (as will be described later in Example 4). Alternatively, the solid laser medium 13 may be constituted of a single crystal of the Pr-Mg-Si-YAG compound.

The excitation wavelengths for the solid laser medium 13 fall within the range of 420nm to 500nm. Therefore, the semiconductor laser diode 11 acting as the exciting light source should preferably be constituted of a semiconductor laser diode, which exhibits an oscillation peak wavelength falling within the range of 360nm to 500nm, or the like. Specifically, the semiconductor laser diode 11 should preferably be constituted of, for example, a nitride type of semiconductor laser diode provided with an active layer, which contains at least one kind of nitrogen-containing semiconductor compound, such as GaN, AlGaN, InGaN, InGaNAs, or GaNAs.

With this embodiment of the solid laser device 10, the wavelengths of the laser beam produced by the solid laser medium 13 are capable of being altered by, for example, an alteration of the Pr doping concentration in the Pr-Mg-Si-YAG compound, utilization of a compound, which employs other luminescent element ions exhibiting an absorption band different from the absorptionb and of Pr, in lieuof the Pr-Mg-Si-YAG compound, or an alteration of the exciting light source.

The aforesaid embodiment of the solid laser device 10 is provided with the solid laser medium 13 constituted of the molded body containing the compound in accordance with the present invention, which compound is capable of producing the laser beam by being excited by the exciting light. Therefore, with the solid laser device 10, a laser beam having a high luminance is capable of being obtained.

### (Examples of design modification)

The solid laser device in accordance with the present invention is not limited to the embodiment described above, and the device constitution may be modified in various ways. For example, as illustrated in Figure 4, a nonlinear optical crystal body 15 may be located between the solid laser medium 13 and the output mirror 14. With the constitution illustrated in Figure 4, the laser beam having been produced by the solid laser medium 13 is capable of being subjected to wavelength conversion (wavelength shortening) for yielding a second harmonic, or the like.

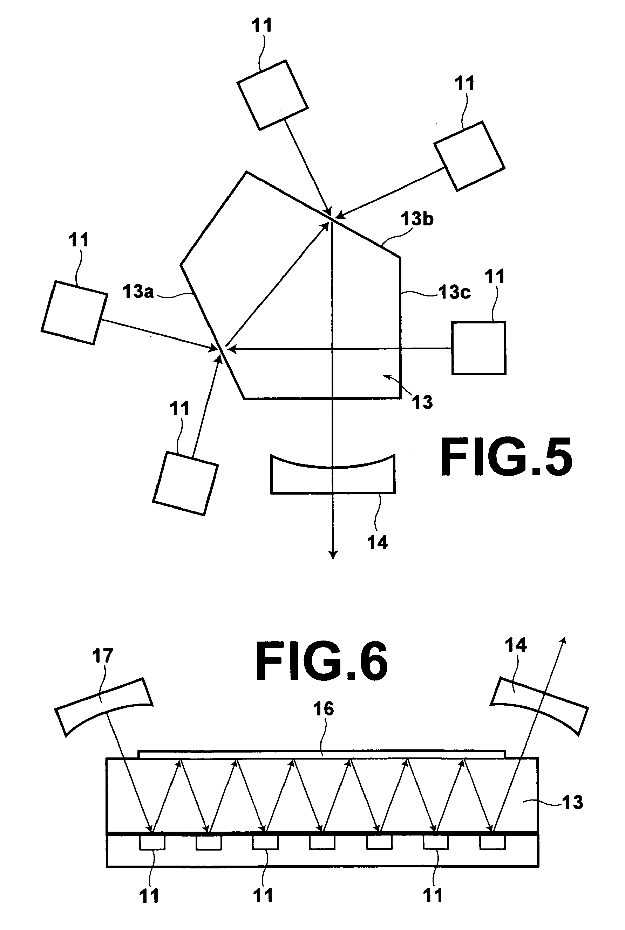

Alternatively, as illustrated in Figure 5, a solid laser medium 13' may be constituted of a polyhedral prism obtained from, for example, polishing processing performed on a polycrystal sintered body of the 1.0% Pr-Mg-Si-YAG compound (as will be described later in Example 4) . Also, the output mirror 14 may be located so as to stand facing one surface of the solid laser medium 13' , and a plurality of semiconductor laser diodes 11, 11, ... may be located so as to stand facing the other surfaces of the solid laser medium 13'. In this manner, a laser diode pumped polyhedral prism type solid laser device may be constituted. In the modification described above, each of exciting light incidence surfaces 13a, 13b, and 13c of the solid laser medium 13' is provided with a coating layer, which transmits the light having the wavelengths falling within the excitation wavelength range, and which reflects the light having the output wavelengths.

As another alternative, as illustrated in Figure 6, a plurality of semiconductor laser diodes 11, 11, ... may be arrayed on one surface of a solid laser medium 13", and a reflecting mirror 16 may be located on the opposite surface of the solid laser medium 13". Also, a reflecting mirror 17 may be located at a position corresponding to one side end of the solid laser medium 13", and the output mirror 14 may be located at a position corresponding to the opposite side end of the solid laser medium 13", such that the reflecting mirror 17 and the output mirror 14 may be approximately symmetric with each other. With the modification described above, a resonator structure is constituted between the exciting light incidence surface of the solid laser medium 13" and the set of the reflecting mirror 16, the reflecting mirror 17, and the output mirror 14.

With each of the modifications of the solid laser device illustrated in Figure 5 and Figure 6, the single solid laser medium 13' or the single solid laser medium 13" is capable of being pumped by the plurality of the semiconductor laser diodes 11, 11, ... Therefore, a solid laser device having a high output is capable of being obtained.

Besides the light emitting device and the solid laser device described above, the compound in accordance with the present invention, the composition in accordance with the present invention, and the molded body in accordance with the present invention are capable of being utilized in a wide variety of other use applications.

### EXAMPLES

The present invention will further be illustrated by the following nonlimitative examples.

### Example 1

A polycrystal sintered body of a 1.0% Pr-Mg-Si-YAG compound in accordance with the present invention was prepared in the manner described below. (In Example 1 and those that follow, the proportion of 1.0%, or the like, represents the Pr doping concentration expressed in terms of mol%.) Raw materials were blended such that the molar ratio Y:Pr:Mg=2.94:0.03:0.03, and such that the molar ratio Al:Si=4.97:0.03.

Firstly, 33.194g of Y₂O₃ particles (purity: 99.9%), 25.337g of α-Al₂O₃ particles (purity: 99.99%), 0.511g of Pr₆O₁₁ particles (purity: 99.99%), 0.121g of MgO particles (purity: 99.99%), and 0.180g of SiO₂ particles (purity: 99.99%) were prepared. The particles described above, 100ml of ethyl alcohol, and 150 10mm-diameter alumina balls were put into a pot mill and were subjected to wet mixing processing for 12 hours.

Thereafter, the alumina balls were removed, and ethyl alcohol was removed from the resulting mixed particle slurry by use of a rotary evaporator. The mixed particles were then dried at a temperature of 100°C for 12 hours. The resulting dry particles were slightly unfastened in a mortar. The thus obtained dry particles were subj ected to uniaxial compression molding processing at a molding pressure of 100MPa and thus molded into a pellet (a circular cylinder-shaped pellet) having a diameter of 10mm and a height of 5mm.

The compression molded body having thus been obtained was subjected to a preliminary firing process in an electric furnace under an air atmosphere. Specifically, with the preliminary firing process, the temperature of the compression molded body was raised to 1,450°C at a temperature rise rate of 500°C/hr and was kept at 1,450°C for two hours, and the compression molded body was then cooled to a temperature of 1, 000°C at a temperature fall rate of 500°C/hr and was then subjected to natural furnace cooling.

After the preliminarily sintered body had cooled to normal temperatures, the preliminarily sinteredbodywas subj ected to grinding processing in a mortar. The resulting particles of the preliminarily sintered body were again subjected to the uniaxial compression molding processing at a molding pressure of 100MPa and thus molded into a pellet (a circular cylinder-shaped pellet) having a diameter of 10mm and a height of 5mm.

The recompression molded body having thus been obtained was subjected to a final firing process in the electric furnace under an air atmosphere. Specifically, with the final firing process, the temperature of the recompression molded body was raised to 1,700°C at a temperature rise rate of 500°C/hr and was kept at 1,700°C for two hours, and the recompressionmoldedbodywas then cooled to a temperature of 1,000°C at a temperature fall rate of 500°C/hr and was then subjected to natural furnace cooling. In this manner, the polycrystal sintered body of the 1.0% Pr-Mg-Si-YAG compound was obtained.

### Examples 2 and 3

A polycrystal sintered body of a 2.0% Pr-Mg-Si-YAG compound (in Example 2) and a polycrystal sintered body of a 3.0% Pr-Mg-Si-YAG compound (in Example 3) were prepared in the same manner as that in Example 1, except that the composition of the raw material particles was altered.

### Comparative Example 1

A polycrystal sintered body of a non-doped YAG compound, which was not doped with Pr, Mg, and Si, was prepared in the same manner as that in Example 1, except that the composition of the raw material particles was altered to a composition constituted of 33.871g of Y₂O₃ particles and 25.490g of α-Al₂O₃ particles.

### Comparative Example 2

A polycrystal sintered body of a 1.0% Pr-YAG compound, which was doped with Pr and was not doped with Mg and Si, was prepared in the same manner as that in Example 1, except that the composition of the raw material particles was altered to a composition constituted of 33.533g of Y₂O₃ particles, 25.490g of α-Al₂O₃ particles, and 0.511g of Pr₆O₁₁ particles.

### Comparative Examples 3, 4, 5, and 6

A polycrystal sintered body of a 0.5% Pr-YAG compound (in Comparative Example 3), a polycrystal sintered body of a 0.75% Pr-YAG compound (in Comparative Example 4), a polycrystal sintered body of a 2.0% Pr-YAG compound (in Comparative Example 5), and a polycrystal sintered body of a 3.0% Pr-YAG compound (in Comparative Example 6) were prepared in the same manner as that in Comparative Example 2, except that the composition of the raw material particles was altered.

### Comparative Example 7

A polycrystal sintered body of a 1.0% Pr-Mg-YAG compound, which was doped with Pr and Mg and was not doped with Si, was prepared in the same manner as that in Example 1, except that the composition of the raw material particles was altered to a composition constituted of 33.194g of Y₂O₃ particles, 25.490g of α-Al₂O₃ particles, 0.511g of Pr₆O₁₁ particles, and 0.121g of MgO particles.

### (Evaluation)

### <Powder X-ray diffraction measurement>

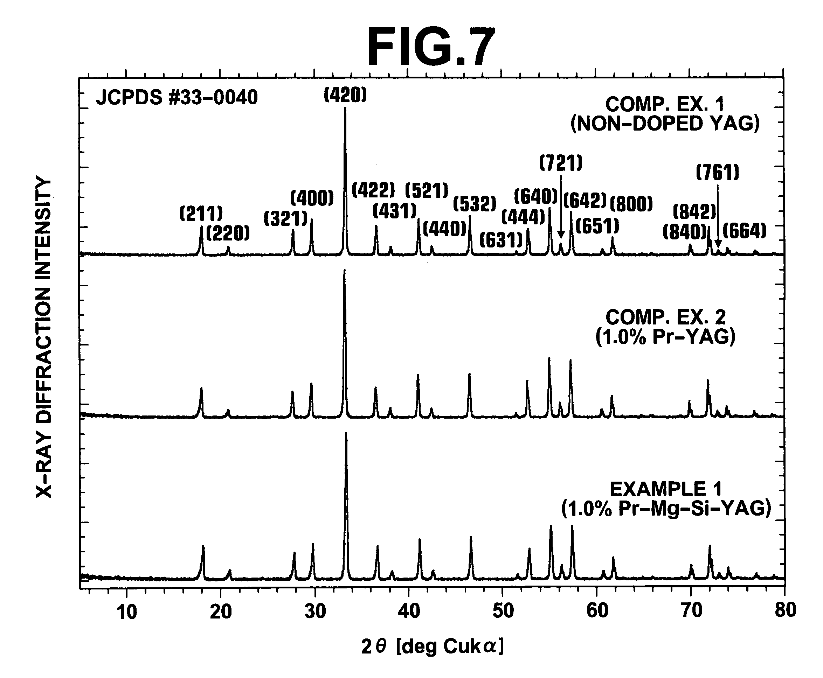

As for each of the polycrystal sintered bodies having been obtained in Examples 1, 2, and 3 (the Pr-Mg-Si-YAG compounds), Comparative Example 1 (the non-doped YAG compound), and Comparative Examples 2, 3, 4, 5, and 6 (the Pr-YAG compounds), the obtained polycrystal sintered body was subjected to grinding processing in a mortar and then subjected to powder X-ray diffraction (XRD) measurement with an X-ray diffraction apparatus (supplied by Rigaku Co.). Measurement conditions were set at CuKα, 40kV, 40mA, scanning speed: 0.5deg/min,lightreceivingslit: 0.15mm. TheXRDmeasurementresults as illustrated in Figure 7 were obtained. Since similar spectrums were obtained with the samples of Examples 1, 2, and 3, only the spectrum obtained with the sample of Example 1 is illustrated in Figure 7. Also, since similar spectrums were obtained with the samples of Comparative Examples 2, 3, 4, 5, and 6, only the spectrum obtained with the sample of Comparative Example 2 is illustrated in Figure 7.

As for every sample, it was confirmed that the diffraction peak perfectly coincided with the diffraction peak of JCPDS#33-0040 (YAG cubic crystal), and that the sample had the single phase structure. It was thus revealed that, in each of Examples 1, 2, and 3, all of Pr, which had been loaded, entered into YAG of the matrix compound, and Y at the A site was appropriately substituted by Pr through the formation of the solid solution.

### <Lattice constant>

The inventors calculated the lattice constant in accordance with the results of the XRDmeasurement described above. Specifically, a diffraction peak value of the YAG cubic crystal at 2θ=100° to 150° was obtained by use of the tangential method, and an accurate lattice constant was calculated by use of the Nelson-Riley function. From the calculations, the lattice constants as illustrated in Figure 8 were obtained.

The Nelson-Riley function may be represented by the formula 1/2 (cosθ)²(1/sinθ+1/θ). The obtained value is plotted on the x axis. Also, the lattice constant a having been obtained from the Bragg diffraction conditions is plotted on the y axis. The value of the y-intercept of the straight line of the method of least squares is taken as the true lattice constant.

The lattice constant of the sample of Comparative Example 1 (the non-doped YAG compound) was 0.1200625nm. The lattice constant of the sample of Example 1 (the 1.0% Pr-Mg-Si-YAG compound) was 0.1200751nm, and the lattice constant of the sample of Comparative Example 2 (the 1.0% Pr-YAG compound) was 0.1200911nm. It was thus revealed that, with the sample of Example 1, in which Pr, Mg, and Si were doped simultaneously, the lattice expansion was capable of being suppressed to approximately half or less of the lattice expansion occurring with the sample of Comparative Example 2, in which only Pr was doped.

The same effects as those described above were obtained also in cases where the Pr doping concentration was 2.0 mol% and 3.0 mol%. The lattice constant of the sample of Example 2 (the 2.0% Pr-Mg-Si-YAG compound) was 0.1200787nm. The lattice constant of the sample of Example 3 (the 3.0% Pr-Mg-Si-YAG compound) was 0.1200835nm.

### <Luminescence characteristics>

As for each of the samples of Example 1 (the 1.0% Pr-Mg-Si-YAG compound), Comparative Example 2 (the 1.0% Pr-YAG compound), and Comparative Example 7 (the 1.0% Pr-Mg-YAG compound), the sample was subjected to luminescence spectrum(fluorescence spectrum)measurement by use of a fluorescence spectrophotometer (F-4500, supplied by Hitachi, Ltd.). The wavelength λₑₓ of the exciting light was set at 452nm, which was associated with the maximum luminescence intensity when the excitation spectrum was taken with respect to the Pr-doped compound.

The results illustrated in Figure 9 were obtained. As illustrated in Figure 9, each of the samples described above exhibited the characteristics such that a plurality of luminescence peaks were found in the visible light wavelength range of 450nm to 700nm (the characteristics described above are the characteristics of Pr). Also, the luminescence peak of the highest intensity was found at a wavelength of 487nm (blue light).

In cases where the luminescence spectrum of the sample of Comparative Example 2 (the 1.0% Pr-YAG compound) is taken as a reference luminescence spectrum, with the sample of Comparative Example 7, in which Pr and Mg were doped, and in which Si was not doped, the luminescence intensities were lower than the luminescence intensities of the sample of Comparative Example 2 over the entire wavelength range. However, with the sample of Example 1, in which Pr, Mg, and Si were doped, the luminescence intensities were higher than the luminescence intensities of the sample of Comparative Example 2 over the entire wavelength range. With the sample of Example 1, the luminescence intensity at the wavelength of 487nm was approximately 1.4 times as high as the luminescence intensity of the sample of Comparative Example 2 at the wavelength of 487nm. With the sample of Comparative Example 7, the luminescence intensity at the wavelength of 487nm was approximately 0.7 times as high as the luminescence intensity of the sample of Comparative Example 2 at the wavelength of 487nm.

As for the samples of the other Examples and the other Comparative Examples, the measurement of the luminescence spectrum was made in the same manner as that described above. As a result, the relationships between the Pr doping concentration and the luminescence intensity at the wavelength of 487nm, which relationships are illustrated in Figure 10, were obtained. As illustrated in Figure 10, regardless of the Prdoping concentration, the effects of enhancing the luminescence intensitywere found with the Pr-Mg-Si-YAG compound, and the efficiency of the compound in accordance with the present invention was thus confirmed.

As illustrated in Figure 8 and Figure 10, in the cases of the samplesofExamples 1, 2, and3 (thePr-Mg-Si-YAGcompound), particularly, within the Pr doping concentration range of over 0 mol% to 3 mol%, inclusive, the lattice strain was suppressed appropriately, and the luminescence of a high luminance was obtained. The inventors presumes that the effects of enhancing the luminescence intensity, which effects are obtained with the compound in accordance with the present invention, are obtained since the spatial strain in the vicinity of Pr is relaxed by the simultaneous formation of the solid solution of Mg and Si.

### Example 4

A polycrystal sintered body of the 1.0% Pr-Mg-Si-YAG compound in accordance with the present invention was obtained in the same manner as that in Example 1, except that the final firing process was altered to a process in a vacuum sintering furnace at a degree of vacuum of 1.3×10⁻³Pa. Specifically, with the process in the vacuum sintering furnace, the temperature of the recompression molded body was raised to 1, 750°C at a temperature rise rate of 500°C/hr and was kept at 1, 750°C for 20 hours, and the recompression molded body was then cooled to a temperature of 1,000°C at a temperature fall rate of 500°C/hr and was then subjected to natural furnace cooling.

The thus obtained polycrystal sintered body was subjected to double-side polishing processing and was then subjected to transmission spectrum measurement. It was found that approximately 80% of the incident light was transmitted through the polycrystal sintered body. It was thus confirmed that, with the process in Example 4, the polycrystal sintered body of the 1.0% Pr-Mg-Si-YAG compound, which polycrystal sintered body exhibited little light scattering and had good transparency, was obtained.

### INDUSTRIAL APPLICABILITY

The compound in accordance with the present invention is capable of being applied appropriately to Pr-doped garnet type compounds, and the like. The compound in accordance with the present invention is capable of being utilized in use applications of light emitting devices, such as photoluminescence devices, solid laser devices, and the like.

## Claims

1. Agarnet type compound, whichmaybe represented by the general formula:
A1(III)₃₋₂ₓA2(II)ₓA3(III)ₓB(III)₂C1(III)₃₋ₓC2(IV)ₓO₁₂
wherein each of the Roman numerals in the parentheses represents the valence number of ion,
each of A1, A2, and A3 represents the element at the A site,
B represents the element at the B site,
each of C1 and C2 represents the element at the C site,
each of A1, A2, B, C1, and C2 represents at least one kind of element exhibiting the corresponding valence number of ion defined above,
A3 represents at least one kind of element selected from the group consisting of trivalent rare earth elements of La, Ce, Pr, Nd, Sm, Eu, Gd, Tb, Dy, Ho, Er, Tm, Yb, and Lu,
A1 and A3 represent different elements,
x represents a number satisfying a condition 0<x<1.5, provided that cases where x=1.0 are excluded, and
O represents the oxygen atom.

2. A garnet type compound as defined in Claim 1 wherein A1 (III) represents at least one kind of element selected from the group consisting of Y, Sc, and In.

3. A garnet type compound as defined in Claim 2 wherein A2 (II) represents at least one kind of element selected from the group consisting of Mg, Ca, Sr, and Mn,
B(III) represents at least one kind of element selected from the group consisting of A1, Sc, Ga, Cr, In, and trivalent rare earth elements of La, Ce, Pr, Nd, Sm, Eu, Gd, Tb, Dy, Ho, Er, Tm, Yb, and Lu,
C1(III) represents at least one kind of element selected from the group consisting of Al and Ga, and
C2(IV) represents at least one kind of element selected from the group consisting of Si and Ge.

4. A garnet type compound as defined in Claim 3 wherein A1 (III) represents Y,
A2(II) represents Mg,
A3(III) represents Pr,
B(III) represents Al,
C1(III) represents Al, and
C2(IV) represents Si.

5. An inorganic compound, containing a solid solution having been formed by substitution of a part of substitutable ions (a) contained in a matrix compound, which substitutable ions (a) have an ionic radius r1, by luminescent element ions (b) exhibiting a valence number of ion of n, which luminescent element ions (b) have an ionic radius r2 larger than the ionic radius r1 of the substitutable ions (a), where r2>r1,
the formation of the solid solution of the luminescent element ions (b) being performed with processing, in which at least one kind of first non-luminescent element ions (c) and at least one kind of second non-luminescent element ions (d) are simultaneously subjected to the formation of the solid solution,
the at least one kind of the first non-luminescent element ions (c) exhibiting an ion valence number a, and having an ionic radius r3 smaller than the ionic radius r1 of the substitutable ions (a), where r3<r1,
the at least one kind of the second non-luminescent element ions (d) exhibiting a valence number of ion of b, where b satisfies a condition a+b=2n.

6. An inorganic compound as defined in Claim 5 wherein the first non-luminescent element ions (c) and the second non-luminescent element ions (d) are subjected in equimolar quantities to the formation of the solid solution.

7. An inorganic compound as defined in Claim 6 wherein the luminescent element ions (b), the first non-luminescent element ions (c), and the second non-luminescent element ions (d) are subjected in equimolar quantities to the formation of the solid solution.

8. An inorganic compound as defined in Claim 5, 6, or 7 wherein the valence number of ion of a of the first non-luminescent element ions (c) satisfies a condition a=n-1, and the valence number of ion of bof the secondnon-luminescent element ions (d) satisfies a condition b=n+1.

9. An inorganic compound as defined in Claim 5, 6, 7, or 8 wherein the valence number of ion of the substitutable ions (a) is equal to the valence number of ion of n of the luminescent element ions (b).

10. An inorganic compound as defined in any of Claims 5 to 9 wherein a lattice site position of the second non-luminescent element ions (d) is different from the lattice site positions of the substitutable ions (a) and the luminescent element ions (b).

11. An inorganic compound as defined in any of Claims 5 to 10 wherein an ionic concentration of the luminescent element ions (b) falls within the range of over 0 mol% to 3 mol%, inclusive.

12. An inorganic compound as defined in any of Claims 5 to 11 wherein the valence number of ion of n of the luminescent element ions (b) is 3.

13. An inorganic compound as defined in Claim 12 wherein the valence number of ion of a of the first non-luminescent element ions (c) is 2, and the valence number of ion of b of the second non-luminescent element ions (d) is 4.

14. An inorganic compound as defined in any of Claims 5 to 13 wherein the matrix compound is a garnet type compound, which may be represented by the general formula:
A(III)₃B(III)₂C(III)₃O₁₂
wherein each of the Roman numerals in the parentheses represents the valence number of ion,
A represents the element at the A site and represents at least one kind of element selected from the group consisting of Y, Sc, In, and trivalent rare earth elements of La, Ce, Pr, Nd, Sm, Eu, Gd, Tb, Dy, Ho, Er, Tm, Yb, and Lu,
B represents the element at the B site and represents at least one kind of element selected from the group consisting of Al, Sc, Ga, Cr, In, and trivalent rare earth elements of La, Ce, Pr, Nd, Sm, Eu, Gd, Tb, Dy, Ho, Er, Tm, Yb, and Lu,
C represents the element at the C site and represents at least one kind of element selected from the group consisting of Al and Ga, and
O represents the oxygen atom.

15. An inorganic compound as defined in Claim 14 wherein the substitutable ions (a) are Y³⁺ ions,
the luminescent element ions (b) are Pr³⁺ ions,
the first non-luminescent element ions (c) are Mg²⁺ ions, and the second non-luminescent element ions (d) are Si⁴⁺ ions.

16. An inorganic compound as defined in Claim 15 wherein the matrix compound is a Y₃Al₅O₁₂ compound.

17. An inorganic compound as defined in any of Claims 5 to 13 wherein the matrix compound is a C rare earth type compound, which may be represented by the general formula:
R(III)₂O₃
wherein the Roman numeral in the parenthesis represents the valence number of ion,
R represents at least one kind of element selected from the group consisting of Y and trivalent rare earth elements of La, Ce, Pr, Nd, Sm, Eu, Gd, Tb, Dy, Ho, Er, Tm, Yb, and Lu, and
O represents the oxygen atom.

18. An inorganic compound as defined in any of Claims 5 to 13 wherein the matrix compound is a perovskite type compound, which may be represented by the general formula:
A(II)B(IV)O₃
wherein each of the Roman numerals in the parentheses represents the valence number of ion,
A represents the element at the A site and represents at least one kind of element selected from the group consisting of Ba, Sr, Ca, Mg, and Pb,
B represents the element at the B site and represents at least one kind of element selected from the group consisting of Ti, Zr, Hf, Th, Sn, and Si, and
O represents the oxygen atom.

19. An inorganic compound as defined in any of Claims 5 to 13 wherein the matrix compound is a perovskite type compound, which may be represented by the general formula:
A(I)B(V)O₃
wherein each of the Roman numerals in the parentheses represents the valence number of ion,
A represents the element at the A site and represents at least one kind of element selected from the group consisting of Li, Na, and K,
B represents the element at the B site and represents at least one kind of element selected from the group consisting of V, Nb, and Ta, and
O represents the oxygen atom.

20. An inorganic compound as defined in any of Claims 5 to 13 wherein the matrix compound is a perovskite type compound, which may be represented by the general formula:
A(II)B1(II)_{1/2}B2(VI)_{1/2}O₃
wherein each of the Roman numerals in the parentheses represents the valence number of ion,
A represents the element at the A site and represents at least one kind of element exhibiting a total valence number of ion of 2,
B1 represents the element at the B site and represents at least one kind of element selected from the group consisting of Fe, Cr, Co, and Mg,
B2 represents the element at the B site and represents at least one kind of element selected from the group consisting of W, Mo, Re, and Os, and
O represents the oxygen atom.

21. An inorganic compound as defined in any of Claims 5 to 13 wherein the matrix compound is a perovskite type compound, which may be represented by the general formula:
A(II)B1(III)_{2/3}B2(VI)_{1/3}O₃
wherein each of the Roman numerals in the parentheses represents the valence number of ion,
A represents the element at the A site and represents at least one kind of element exhibiting a total valence number of ion of 2,
B1 represents the element at the B site and represents at least one kind of element selected from the group consisting of In, Sc, Y, Cr, Fe, and trivalent rare earth elements of La, Ce, Pr, Nd, Sm, Eu, Gd, Tb, Dy, Ho, Er, Tm, Yb, and Lu,
B2 represents the element at the B site and represents at least one kind of element selected from the group consisting of W, Mo, and Re, and
O represents the oxygen atom.

22. An inorganic compound as defined in any of Claims 5 to 13 wherein the matrix compound is a perovskite type compound, which may be represented by the general formula:
A(II)B1(III)_{1/2}B2(V)_{1/2}O₃
wherein each of the Roman numerals in the parentheses represents the valence number of ion,
A represents the element at the A site and represents at least one kind of element exhibiting a total valence number of ion of 2,
B1 represents the element at the B site and represents at least one kind of element selected from the group consisting of Sc, Fe, Bi, Mn, Cr, In, Ga, Ca, and trivalent rare earth elements of La, Ce, Pr, Nd, Sm, Eu, Gd, Tb, Dy, Ho, Er, Tm, Yb, and Lu,
B2 represents the element at the B site and represents at least one kind of element selected from the group consisting of Nb, Ta, Os, and Sb, and
O represents the oxygen atom.

23. An inorganic compound as defined in any of Claims 5 to 13 wherein the matrix compound is a perovskite type compound, which may be represented by the general formula:
A(II)B1(II)_{1/3}B2(V)_{2/3}O₃
wherein each of the Roman numerals in the parentheses represents the valence number of ion,
A represents the element at the A site and represents at least one kind of element exhibiting a total valence number of ion of 2,
B1 represents the element at the B site and represents at least one kind of element selected from the group consisting of Mg, Co, Ni, Zn, Fe, Pb, Sr, and Ca,
B2 represents the element at the B site and represents at least one kind of element selected from the group consisting of Nb and Ta, and
O represents the oxygen atom.

24. An inorganic compound as defined in any of Claims 5 to 13 wherein the matrix compound is a compound, which may be represented by the general formula:
A(III)B(III)O₃
wherein each of the Roman numerals in the parentheses represents the valence number of ion,
A represents the element at the A site and represents at least one kind of element selected from the group consisting of Y, La, Gd, and Bi,
B represents the element at the B site and represents at least one kind of element selected from the group consisting of A1, Sc, V, Cr, Fe, Co, Ga, and Y, and
O represents the oxygen atom.

25. An inorganic compound as defined in any of Claims 5 to 13 wherein the matrix compound is a compound, which may be represented by the general formula:
A(III)B(III)O₃
wherein each of the Roman numerals in the parentheses represents the valence number of ion,
A represents the element at the A site and represents at least one kind of element selected from the group consisting of Ce, Pr, Nd, Sm, and Eu,
B represents the element at the B site and represents at least one kind of element selected from the group consisting of Al, Sc, V, Cr, Fe, Co, Ga, and Y, and
O represents the oxygen atom, and
the luminescent element ions (b) are of an element different from the elements constituting the matrix compound.

26. A composition, containing:
a garnet type compound as defined in Claim 1, 2, 3, or 4, or an inorganic compound as defined in any of Claims 5 to 25.

27. A molded body, containing:
a garnet type compound as defined in Claim 1, 2, 3, or 4, or an inorganic compound as defined in any of Claims 5 to 25.

28. A molded body as defined in Claim 27 wherein the molded body is constituted of:
a polycrystal sintered body, which contains the garnet type compound or the inorganic compound, or
a molded body having been obtained from processing, in which particles of the polycrystal sintered body having been obtained from grinding processing are bound together by a binder and are molded.

29. Amolded body as defined in Claim 27 or 28 wherein the garnet type compound or the inorganic compound is a luminescent compound, which is capable of producing luminescence when being excited by exciting light.

30. Amoldedbody as defined in Claim 27 or 28 wherein the garnet type compound or the inorganic compound is a laser substance, which is capable of producing a laser beam by being excited by exciting light.

31. A light emitting device, comprising:
i) a luminescent body (5) constituted of a molded body as defined in Claim 29, and
ii) an exciting light source (3) for producing the exciting light to be irradiated to the luminescent body (5).

32. A solid laser device, comprising:
i) a solid laser medium (13) constituted of a molded body as defined in Claim 30, and
ii) an exciting light source (11) for producing the exciting light to be irradiated to the solid laser medium (13).
